# EUROPEAN PATENT APPLICATION

(11) **EP 0 646 918 A2**
(43) Date of publication of application: **05.04.1995**
(21) Application number: 94115376.9
(22) Date of filing: 29.09.1994
(51) Int. Cl.: G11B 23/087

(54) **Magnetic tape cartridge having slidable shutter assembly**

(30) Priority: 30.09.1993 JP 57369/93 U; 01.10.1993 JP 57811/93 U; 14.10.1993 JP 60277/93 U; 14.10.1993 JP 60279/93 U
(71) Applicant: FUJI PHOTO FILM CO., LTD., Kanagawa 250-01 (JP)
(72) Inventor: Morita, Kiyoo, c/o Fuji Photo Film Co., Ltd., Osawara-shi, Kanagawa (JP); Asano, Katsuki, c/o Fuji Photo Film Co., Ltd., Osawara-shi, Kanagawa (JP)
(74) Representative: Grünecker, Kinkeldey, Stockmair & Schwanhäusser Anwaltssozietät

(57) **Abstract**

A magnetic tape cartridge having a slidably attached shutter. In a first embodiment, bent portions are provided above and below a front wall portion of the shutter as curved or inclined surfaces. The head-inserting opening formed in the front wall of the shutter terminates short of the curved or inclined surfaces. In a second embodiment, the upper and lower shutter portions are separate and are fitted to the cartridge body separately. The upper and lower portions are then connected to each other. In a third embodiment, a hub-rotation preventing device is formed from a synthetic resin separately from the shutter and later attached to the shutter. In a fourth embodiment, a recess is formed in shutter or the case body, and a corresponding fitting projection is formed in the shutter or the case body so that the recess and the projection mate when the shutter is in a closed position.

## Description

### BACKGROUND OF THE INVENTION

### I. Field of the Invention

The present invention relates to a magnetic tape cartridge having a thin plate-shaped shutter slidably secured on the cartridge body. The shutter covers a magnetic head-inserting window, pockets through which pinch rollers are inserted, and hub holes, all of which are provided in a box-shaped cartridge formed by upper and lower cartridge halves.

### II. Background of the Invention

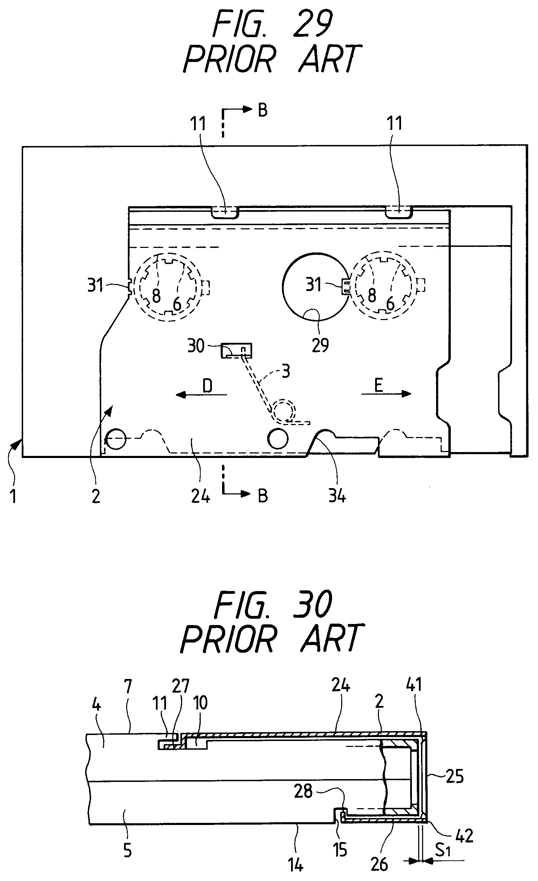

In recent years, a magnetic tape cartridge, generally known as a digital compact cartridge (DCC), has been used for recording information such as music and images by means of digital signals. One example of such a conventional magnetic tape cartridge is shown in Figs. 28-33.

As shown in Fig. 28, this conventional magnetic tape cartridge includes a cartridge body 1 accommodating therein a magnetic tape or the like, a shutter 2 which is slidably attached to the cartridge body 1, and a spring 3 interposed between the cartridge body 1 and the shutter 2 to urge the shutter 2 in a closed direction.

The cartridge body 1 is substantially box-shaped and comprises a pair of upper and lower cartridge halves 4, 5 formed by injection molding a synthetic resin. Accommodated therein are a pair of reel hubs 6 around which a magnetic tape (not shown) is wound, guide rollers for guiding the magnetic tape as it is wound around the reel hubs 6, and various other components.

In addition, the following portions of the cassette are formed in a bottom wall portion 7 of the lower cartridge half 4: hub holes 8 which permit tape drive shafts (hub drive shafts) in a digital recording/reproducing apparatus to be inserted in the reel hubs 6; a spring-loading recess 9 for accommodating the spring 3; a bottom guide groove 10 extending in a longitudinal direction of the cartridge (in the direction of arrow A in Fig. 28) for restricting the sliding movement of the shutter 2; and bottom-retaining pieces 11 extending over the bottom guide groove 10 to retain an edge of the shutter 2 in the groove 10.

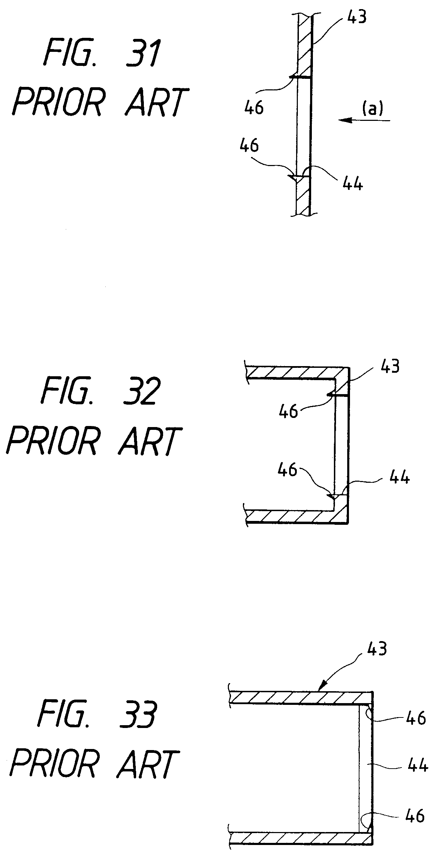

As shown in Fig. 30, an upper guide groove 15 extending in the longitudinal direction of the cartridge for restricting the sliding direction of the shutter 2 in the same way as the above-described bottom guide groove 10, is formed in an upper wall portion 14 of the upper cartridge half 5. In addition, although not shown, a window made of a transparent resin is provided in the upper wall portion 14 of the upper cartridge half 5 so the user can visually confirm the amount of magnetic tape wound around each reel hub 6 inside the cartridge body 1.

As shown in Fig. 28, the cartridge front surface 17 of the cartridge body 1 comprises front wall portions of the lower cartridge half 4 and the upper cartridge half 5, and a magnetic tape 18 runs adjacent the front surface 17 for reading and writing information. Formed in the cartridge front surface 17 are a magnetic head-inserting window 19 for insertion of a magnetic head of the digital recording/reproducing apparatus, and pockets 20, 21 for insertion of pinch rollers of the digital recording/reproducing apparatus.

A stepped-down portion equal in height to at least the thickness of the shutter 2 is appropriately provided in the lower cartridge half 4 and the upper cartridge half 5 in the path of the shutter 41, so that the cartridge surface and the surface of the shutter 2 are flat, i.e., coplanar.

The shutter 2 prevents dust and other debris from entering the cartridge body through an opening in the cartridge body 1 during storage or other periods of non-use, and prevents fouling of the magnetic tape 18 when the user's fingers inadvertently contact the magnetic tape 18 exposed in the magnetic head-inserting window 19 and the pockets 20, 21. As shown in Fig. 28, the shutter 2 has an integral structure formed by bending a metal thin plate, and comprises a bottom wall portion 24 for covering the hub holes 8 in the cartridge bottom surface, as well as an upper wall portion 26 and a front wall portion 25 for covering the magnetic head-inserting window 19 and the pockets 20, 21.

As shown in Fig. 30, a horizontal flange 27, which extends in a horizontal direction in parallel with the surface of the bottom wall portion 7 and is inserted between the bottom guide groove 10 and the bottom-retaining pieces 11, is provided at a rear end of the bottom wall portion 24. Meanwhile, a vertical flange 28, which extends in a vertical direction perpendicular to the surface of the upper wall portion 14 and is inserted in the upper guide groove 15, is provided at a rear end of the upper wall portion 26.

In addition, as shown in Fig. 28, the bottom wall portion 24 is provided with a shaft-inserting opening 29 corresponding to the hub hole 8, a spring-engaging piece 30 for receiving an urging force from the spring 3, and a hub-rotation preventing means 31 for preventing the rotation of the reel hub 6 inside the cartridge body 1 when the shutter is in the closed position and the hub hole 8 is closed. The front wall portion 25 is provided with a head-inserting opening 33 corresponding to the magnetic head-inserting window 19 and a pinch roller opening 34 corresponding to the pocket 21 for entrance of the pinch roller.

The above-described conventional shutter 2 is fitted to the cartridge body 1 while portions of the bottom wall portion 24 and the upper wall portion 26 are resiliently deformed, and the horizontal flange 27 and the vertical flange 28 are engaged in the grooves 10 and 15, respectively, thereby slidably securing the shutter 2 on the cartridge body 1.

Fig. 29 shows a state in which the shutter 2 is fitted to the cartridge body 1. When one end of the spring member 3 engages the spring-engaging piece 30 and the magnetic tape cartridge is not loaded in the digital recording/reproducing apparatus, the shutter 2 is urged in the direction of arrow D by the spring member 3, thereby closing the openings in the cartridge body 1. The digital recording/reproducing apparatus is provided with a shutter-opening device for moving the shutter 2 in the direction of arrow E against the urging force of the spring member 3. As the magnetic tape cartridge is loaded in the digital recording/reproducing apparatus, the shutter 2 is moved so that the shaft-inserting opening 29 in the shutter 2 coincides with the hub hole 8 in the cartridge body 1, thereby opening the magnetic head-inserting window 19 and the pockets 20, 21 for entrance of the pinch rollers.

In the above-described conventional magnetic tape cartridge shown in Fig. 30, an arrangement may be adopted whereby a portion 41 between the bottom wall portion 24 and the front wall portion 25 and a portion 42 between the front wall portion 25 and the upper wall portion 26 are bent orthogonally.

The bent portions 41, 42 provide a smooth sliding shutter 2 and improve the strength of the attachment of the shutter 2 to the cartridge body. The bent portions 41, 42 reduce the gap S1 between the cartridge front surface 17 and the front wall portion 25 and therefore reduce the amount of clearance between the shutter 2 and the cartridge body 1.

As shown in Fig. 31, if an opening 44 is formed by punching a metallic thin-plate member 43 in the direction of arrow (a), burrs 46 projecting in the punching direction may remain at the peripheral edge of the opening 44.

As shown in Fig. 32, it is possible to obtain the U-shaped cross section of the shutter 2 by orthogonally bending a portion of the shutter 2 located slightly outwardly of the opening 44 orthogonally toward the projecting side of the burrs 46. In fact, both punching and bending operations can be performed simultaneously. However, in conventional magnetic tape cartridges, there is only a very small gap S1 between the cartridge front surface 17 and the front wall portion 25 of the shutter 2, and the projecting burrs 46 tend to rub against the cartridge front surface 17 thereby releasing shavings or other small debris and generally destroying the sliding characteristics of the shutter 2. To prevent this problem, a separate step of grinding may be necessary for removing the burrs 46.

As shown in Fig. 33, a conventional solution has been to direct the projecting direction of the burrs 46 to lie within the plane of the opening 44 by setting the upper and lower ends of the opening 44 as bending positions. Since the burrs 46 do not project toward the cartridge front surface 17, the burrs 46 do not rub against the cartridge front surface, and the problems associated with the occurrence of shavings and destruction of the sliding characteristics caused by the burrs 46 do not occur.

Nonetheless, when the head-inserting opening 33 in the shutter 2 is constructed as shown in Fig. 33, the user's fingers may contact the burrs 46 during the handling of the magnetic tape cartridge, possibly injuring the user. In addition, there is no reinforcing effect for the upper and lower ends of the opening 44 caused by the bending, resulting in a possibility of deformation due to a decline in strength, as well as a possibility that the sliding characteristics are destroyed and/or the strength with which the shutter 2 is attached to the cartridge body 1 is reduced.

In addition, when the structure of the head-inserting opening 33 in the shutter 2 is as shown in Fig. 28, the dimensional accuracy at the upper and lower ends of the head-inserting opening 33 is reduced due to the projecting burrs. The alignment of the head-inserting opening 33 and the magnetic head-inserting window 19 formed in the cartridge front surface 17 of the cartridge body 1 is also less accurate. Further, since the cartridge body 1 is an assembly of the lower cartridge half 4 and the upper cartridge half 5, it is difficult to accurately form the head-inserting opening 33.

As is apparent from Fig. 30 as well, the gap between the horizontal flange 27 and the vertical flange 28 in the shutter 2 is smaller than the thickness of the cartridge body 1 on which the shutter 2 slides. Accordingly, the conventional shutter 2 is fitted to the cartridge body 1 from the cartridge front surface side by resiliently deforming portions of the bottom wall portion 24 and the upper wall portion 26 so that the gap between the horizontal flange 27 and the vertical flange 28 is expanded.

Since the spring-engaging piece 30, the hub-rotation preventing means 31 and the like project from the bottom wall portion 24 of the shutter 2, these projecting portions are sometimes caught by the cartridge front surface 17 and the outer surface when the shutter 2 is fitted to the cartridge body 1. Further, if the dimension S1 of the shutter 2 in Fig. 30 is excessively large to facilitate the fitting of the shutter 2, problems occur in the sliding characteristics. Hence, defective products are produced frequently, and the fitting operation of the shutter 2 is difficult and inefficient. Consequently, it is difficult to improve the manufacturing productivity for these conventional magnetic tape cartridges.

Additional problems with the conventional cassette tape are described below.

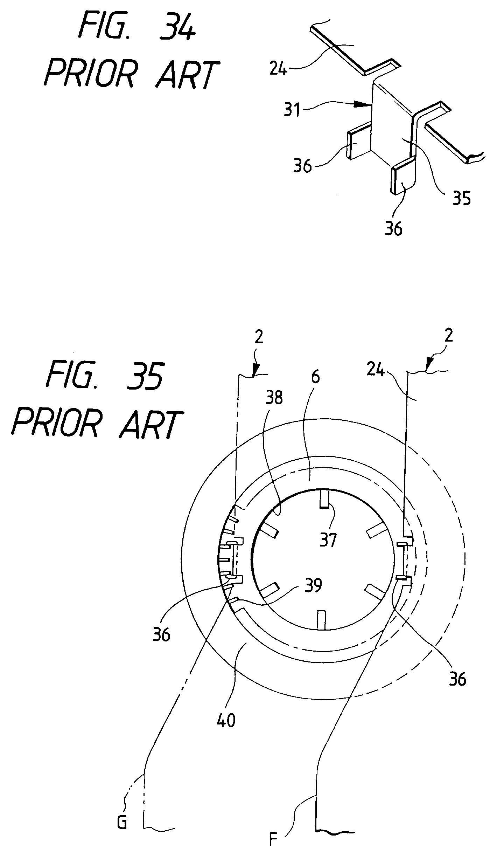

The hub-rotation preventing means 31 is integrally formed on the bottom wall portion 24 of the shutter 2 (see Fig. 28). As shown in Fig. 34, the hub-rotation preventing means 31 comprises a column piece 35 which is bent perpendicularly from the bottom wall portion 24 of the shutter 2 to project into the hub hole 8, and a pair of hub-retaining projections 36 which are bent perpendicularly from a tip of the column piece 35 to project in the sliding direction.

As shown in Fig. 35, the reel hub 6 is arranged so that hub pawls 37 for engaging the tape-driving shaft of the digital recording/reproducing apparatus project from an inner peripheral portion 38. A gear portion 40 having rotation-preventing internal teeth 39 is provided concentrically with the inner peripheral portion 38 above and outwardly from the hub pawls 37. When the shutter 2 is open as indicated by reference character F in Fig. 35, the hub-retaining projections 36 are positioned between the rotation-preventing internal teeth 39 and the hub pawls 37, and are maintained in that state to permit rotation of the reel hub 6. When the shutter 2 is closed as indicated by reference character G, the hub-retaining projections 36 are positioned between adjacent ones of the rotation-preventing internal teeth 39, and rotation of the reel hub 6 is thus prevented.

When an article having a predetermined three-dimensional structure is fabricated through a series of sheet metal working operations including the blanking and bending of a plate material such as the above-described shutter 2, the greater the number of bending operations, the more difficult it is to maintain dimensional accuracy. Further, the number of processing steps is increased, and the production cost is high.

In the above-described conventional cassette, the hub-rotation preventing means 31 must be accurately engaged with the internal teeth to prevent rotation of the reel hub 6, so considerable dimensional accuracy is necessary. However, two bending steps of the bottom wall portion 24 are required to form the column piece 35 and the hub-retaining projections 36. Additionally, since the dimensions are relatively small, it is extremely difficult to achieve the necessary degree of accuracy and precision. Consequently, there have been problems such as decreases in the product yield and a decline in the function of preventing rotation of the reel hub 6, each contributing to increased production costs.

In addition, since the reel hub 6 is formed of a synthetic resin, small particles (e.g., shavings or other debris) may form when the rotation-preventing internal teeth 39 engage the hub-retaining projections 36. These particles tend to foul the magnetic tape 18.

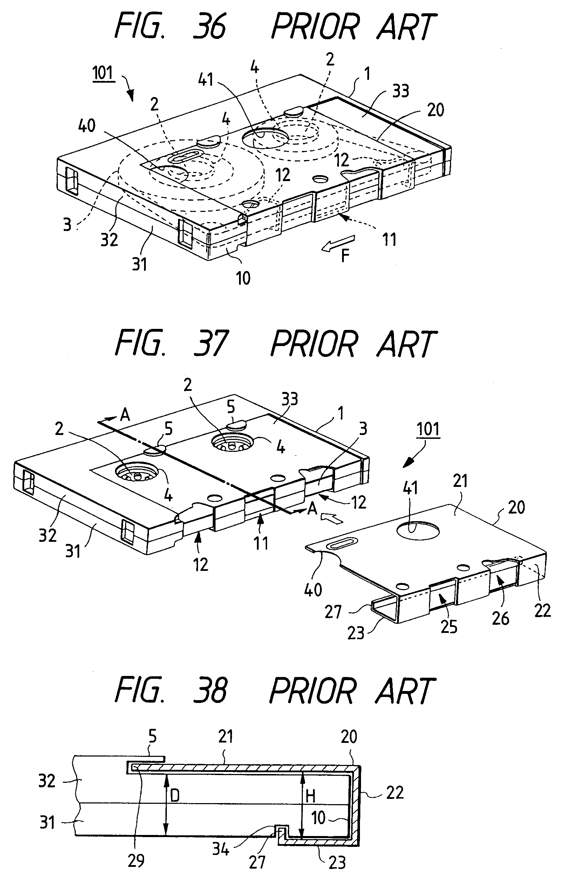

Another conventional cartridge is shown in Figs. 36-38. The magnetic tape cartridge 101 shown in Figs. 36-38 is substantially similar to those described above, except for a few distinguishing features with respect to the way the shutter 20 attaches to the main body case 1.

In Figs. 36 and 37, a magnetic tape 3 wound around a pair of reel hubs 2 is accommodated inside a body case 1 having the shape of a hollow box formed by abutting upper and lower half cases 31, 32, respectively. A shutter 20 is fitted over an outer surface of the case.

A pair of hub holes 4 are provided in the lower half case 32 of the body case 1, and the reel hubs 2 are positioned to correspond with the driving and inserting holes 4. In addition, a head-inserting window 11 and pockets 12 for entrance of pinch rollers are provided in a front surface wall 10 of the body case 1 to form a path for the magnetic tape 3.

The shutter 20 is a metallic member having a substantially U-shaped cross section in which openings 40, 41 having the same shapes as the hub holes in the body case 1 (except for the semicircular notch or opening 40) are formed in a lower surface plate 21 (shown on the upper side in Fig. 37), and openings 25 and 26 having the same shapes as the head-inserting window 11 and the pockets 12 for entrance of the pinch rollers are formed in a front surface plate 22. The shutter 20 is fitted to the body case 1 so as to sandwich the body case 1 by means of the lower surface plate 21 and the upper surface plate 23.

The shutter 20 is fitted slidably on the body case 1 and urged in the direction of arrow F by a spring member (not shown) accommodated in an appropriate recess formed in the outer surface of the case and engaging an inner side of the shutter 20. Consequently, the shutter 20 is normally biased toward the deft-hand side, as viewed in Fig. 36, on the shutter sliding surface 33 of the body case 1, thereby closing the hub holes 4, the head-inserting window 11, and the pockets 12 to prevent entrance of the pinch rollers.

When recording or reproduction are desired, the magnetic tape cartridge 101 is loaded on the recording/reproducing apparatus, and the shutter 20 slides toward the right-hand side in Figs. 36 and 37 on the shutter sliding surface 33 against the urging force of the biasing spring to expose the hub holes 4, the head-inserting window 11, and the pockets 12 for entrance of the pinch rollers. The drive shafts, the magnetic head, and the pinch rollers (not shown) are then inserted into the respective openings.

As described above, the magnetic tape cartridge 101 is constructed so that each opening is closed by the sliding operation of the shutter 20. More specifically, the structure is such that the magnetic tape is protected during storage or other periods of non-use since the shutter 20 covers the magnetic head-inserting window 11 and the pockets 12 for entrance of the pinch rollers, thereby covering exposed portions of the magnetic tape 3.

In the assembling procedure of the magnetic tape cartridge 101, the reel hubs 2 with the magnetic tape 3 wound therearound in advance are fitted in correspondence with the hub holes 4 provided in the lower half case 22, and the other component members are fitted. Then, the upper half case 31 is abutted against the lower half case 32 to integrate the upper and lower half cases and assemble the body case 1. Finally, the shutter 20 is fitted so as to sandwich the body 1 by means of the upper surface plate 23 and the lower surface plate 20.

Fig. 38 is a cross-sectional view taken along the line A - A of Fig. 37, and illustrates a state in which the shutter 20 is fitted to the body case 1. As illustrated in the drawing, a guide groove 34 parallel to the front surface wall 10 is provided over the entire width of the shutter sliding surface 33 in the flat surface portion of the upper half case 31, while pawl pieces 5 having an L-shaped cross section are provided in the flat surface portion of the lower half case 32. The structure is such that when the shutter 20 is fitted to the body case 1, a bent portion 27 provided on the front surface plate 23 of the shutter 20 is slidably engaged in the guide groove 34, and an end 29 of the shutter lower surface plate 21 is supported by the pawl pieces 5. Consequently, the sliding movement of the shutter 20 is smooth, and the shutter 20 is securely attached to the case 1.

The fitting of the shutter 20 to the body case 1 is effected as the lower surface plate end 29 of the shutter 20 is inserted below the pawl pieces 5 of the lower half case 32, and the bent portion 27 is fitted into the guide groove 34 in the upper half case 31. However, since the shutter 20 is formed of metal, it takes a relatively long period of time to fit the bent portion 27 into the guide groove 34 against the rigidity of the metal. In addition, since the shutter 20 is fitted to the body case 1 by means of the spring member (not shown) so as to be urged in the direction of arrow F in Fig. 36 during storage, the spring member must be attached simultaneously. Thus, the fitting of the shutter 20 to the body case 1 is time-consuming, and the assembling efficiency is poor.

Accordingly, in order to improve the assembling efficiency, the gap (H) between the lower surface plate 21 and the upper surface plate 23 of the shutter 20 is set to be greater than the thickness (D) of the body case 1 but not so great that the bent portion 27 will become disengaged from the guide groove 34 in the body case 1. Consequently, the shutter 20 may be displaced slightly in the direction of the thickness (D) of the body case 1. If the magnetic tape cartridge is subjected to a strong impact during manufacture, storage or the like, the bent portion 27 is likely to be disengaged from the guide groove 34 in the body case 1.

The present invention aims to overcome the above-described problems, and it is one object of the present invention to provide a magnetic tape cartridge which eliminates the burrs formed when punching the head-inserting opening of the shutter, and which therefore also eliminates a step of removing the burrs. Another object of the present invention is to provide a magnetic tape cartridge which is not easily deformed due to a lack of strength in the vicinity of the head-inserting opening, and which retains excellent sliding characteristics and attachment strength. It is a further object to provide a cassette with high dimensional accuracy.

It is a further object of the present invention to provide a magnetic tape cartridge in which the shutter is easily and efficiently fitted to the cartridge body despite the presence of hub-rotation preventing means and the like projecting from the shutter toward the cartridge body side, thereby making it possible to also improve the manufacturing productivity of the magnetic tape cartridges.

It is still another object of the present invention to provide a magnetic tape cassette in which it is possible to easily and efficiently attach the hub-retaining projection to the shutter with a high degree of accuracy and precision, and in which it is possible to reduce the number of bending operations required for the formation of the shutter so as to improve product yield and dimensional accuracy. Another object of the present invention is to provide a magnetic tape cassette which makes it possible to eliminate the possibility that the magnetic tape will become fouled due to shavings or other debris produced when the rotation-preventing internal teeth are engaged with the hub-retaining projection.

Yet another object of the present invention is to provide a magnetic tape cartridge in which the shutter is not disengaged even when the magnetic tape cartridge is subjected to a strong impact, and to provide a cartridge with the correct clearances between the shutter and the body and one which is easily and efficiently assembled.

### SUMMARY OF THE INVENTION

The above objects of the present invention are attained according to a first embodiment of the invention by a magnetic tape cartridge wherein a pair of reel hubs around which a magnetic tape is wound are accommodated in a cartridge body by means of a pair of upper and lower cartridge halves, a magnetic head-inserting window and pockets for entrance of pinch rollers are provided in a cartridge front surface where the magnetic tape wound around the reel hubs travels, and a shutter made of a thin-plate member is provided slidably on the cartridge body so as to open or close hub holes in the cartridge body and an opening at the cartridge front surface, characterized in that the shutter comprises a bottom wall portion adapted to slide on a bottom surface of the cartridge body, a front wall portion adapted to slide on a front surface of the cartridge body, and an upper wall portion continuing from an upper end of the front wall portion and adapted to slide on an upper surface of the cartridge body, and wherein a bent portion between the bottom wall portion and the front wall portion and a bent portion between the front wall portion and the upper wall portion are curved or inclined surfaces, and wherein at least a head-inserting opening formed in the front wall portion of the shutter in correspondence with the magnetic head-inserting window is sized so as not to extend to the curved or inclined surfaces.

In a second embodiment, the above objects of the present invention are attained by a magnetic tape cartridge wherein a pair of reel hubs around which a magnetic tape is wound are accommodated in a cartridge body by means of a pair of upper and lower cartridge halves, a magnetic head-inserting window and pockets for entrance of pinch rollers are provided in a cartridge front surface where the magnetic tape wound around the reel hubs travels, and a shutter made of a thin-plate member is provided slidably on the cartridge body so as to open or close hub holes in the cartridge body and an opening at the cartridge front surface, characterized in that the shutter is structured as an assembly of a lower shutter portion having a bottom wall portion adapted to slide on a cartridge bottom surface as well as an upper shutter portion having an upper wall portion adapted to slide on a cartridge upper surface, wherein the lower shutter portion and the upper shutter portion can be fitted to the cartridge body separately, and the shutter is provided with connecting means for connecting and fixing together the lower shutter portion and the upper shutter portion with the shutter fitted to the cartridge body.

In a slight variation of the second embodiment of the present invention, the above objects are attained by an arrangement in which the lower shutter portion has a front wall portion in which the magnetic head-inserting window and the pockets for entrance of pinch rollers are formed, the front wall portion being provided with a plurality of retaining-piece inserting grooves on both obverse and reverse sides in a direction parallel to a thickness direction of the cartridge, retaining holes being provided respectively in the retaining-piece inserting grooves, the upper shutter portion being provided with retaining pieces which have retaining projections for engagement in the retaining holes and project in such a manner as to enter the retaining-piece inserting grooves, respectively, whereby the retaining holes and the retaining projections are engaged with each other to connect and fix together the lower shutter portion and the upper shutter portion. Furthermore, the above object can be attained by an arrangement in which the upper shutter portion has a front wall portion in which the magnetic head-inserting window and pockets for entrance of pinch rollers are formed, a retaining pawl being provided on a supporting piece projecting in such a manner as to extend in parallel with the upper wall portion of the shutter portion at an edge of the front wall portion, a slit into which the retaining pawl is capable of being inserted being provided in the lower shutter portion, whereby the retaining pawl is inserted into the slit to connect and fix together the lower shutter portion and the upper shutter portion.

In a third embodiment of the present invention, the above objects of the present invention are attained by a magnetic tape cassette wherein a pair of reel hubs around which a magnetic tape is wound are accommodated in a cassette body by means of a pair of upper and lower cassette halves, a magnetic head-inserting window and pockets for entrance of pinch rollers are provided in a cassette front surface where the magnetic tape wound around the reel hubs travels, and a shutter made of a thin-plate member is provided slidably on the cassette body so as to open or close hub holes in the cassette body and an opening at the cassette front surface, characterized in that a hub-rotation preventing means is provided on the shutter so as to protrude in an inward direction of the cassette to prevent the rotation of reel hubs by means of a hub-retaining projection for engaging rotation-preventing internal teeth formed on an inner peripheral side of each of the reel hubs when the shutter, and wherein the hub-rotation preventing means is formed so that at least the hub-retaining projection for engaging the rotation-preventing internal teeth is formed of a synthetic resin separately from a remaining portion of the shutter.

In accordance with a fourth embodiment of the present invention, the above objects are attained by a magnetic tape cartridge in which a pair of reel hubs with a magnetic tape wound therearound are accommodated inside a body case, shaped in the form of a hollow box formed by causing a pair of upper and lower half cases to abut against each other, in correspondence with hub holes, a magnetic head-inserting window and pockets for entrance of pinch rollers being provided in a front surface portion of the body case, there is provided a shutter attached slidably to the body case so as to open or close the hub holes and openings in the front surface portion, characterized in that the shutter is urged in a direction in which the hub holes and the openings in the front surface portion are closed, a projection projecting in a moving direction of the shutter or a recess cut in the moving direction of said shutter and having a shape for guiding the movement of the shutter is formed at a edge on an urging-direction side of the shutter, and a corresponding fitting portion which mates with the recess or the projection is formed on the body case at a position opposing the projection or the recess.

### BRIEF DESCRIPTION OF THE DRAWINGS

Fig. 1 is an exploded perspective view taken from the bottom side of a first embodiment of the present invention;
Fig. 2 is a bottom view of the first embodiment of the present invention;
Fig. 3 is a cross-sectional view taken along the line I-I of Fig. 2;
Fig. 4 is a top view of the first embodiment of the present invention;
Fig. 5 is an enlarged perspective view of an essential portion in accordance with a modified version of the first embodiment of the present invention;
Fig. 6 is an exploded perspective view taken from the bottom side of a second embodiment of the present invention;
Fig. 7 is a bottom view of the second embodiment of the present invention;
Fig. 8 is a cross-sectional view taken along the line I-I of Fig. 7;
Fig. 9 is a top view of the second embodiment of the present invention;
Fig. 10 is an enlarged perspective view illustrating a shutter in accordance with the second embodiment;
Fig. 11 is an enlarged perspective view of the shutter in accordance with a modified version of the second embodiment;
Fig. 12 is an enlarged perspective view of the shutter in Fig. 11 as assembled;
Fig. 13 is an exploded perspective view taken from the bottom side of a third embodiment of the present invention;
Fig. 14 is a bottom view of the third embodiment of the present invention;
Fig. 15 is a cross-sectional view taken along the line I-I of Fig. 14;
Fig. 16 is a top view of the third embodiment of the present invention;
Fig. 17 is a perspective view illustrating an arrangement of an essential portion of a shutter in accordance with the third embodiment of the present invention;
Fig. 18 is an explanatory diagram of a structure for attaching a hub-rotation preventing means in accordance with the third embodiment of the present invention;
Fig. 19 is an explanatory diagram of the operation of the hub-rotation preventing means in accordance with the third embodiment of the present invention;
Fig. 20 is a perspective view illustrating an arrangement of the essential portion of the shutter in accordance with a modified version of the third embodiment;
Fig. 21 is an explanatory diagram of a structure for attaching the hub-rotation preventing means in accordance with the modified version of the third embodiment;
Fig. 22 is an explanatory diagram of the essential portion of the shutter in accordance with another modified version of the third embodiment;
Fig. 23 is a diagram for explaining the blanking of the essential portion of the shutter in accordance with the shutter in Fig. 22;
Fig. 24 is an explanatory diagram of the structure for attaching the essential portion of the shutter in Figs. 22 and 23;
Fig. 25 is a top perspective view of a magnetic tape cartridge in accordance with a fourth embodiment of the present invention;
Fig. 26 is a perspective view of an essential portion illustrating a modification of the magnetic tape cartridge in accordance with the fourth embodiment;
Fig. 27 is a perspective view of an essential portion illustrating another modification of the magnetic tape cartridge in accordance with the fourth embodiment;
Fig. 28 is a perspective view of a conventional magnetic tape cartridge;
Fig. 29 is a bottom view of the magnetic tape cartridge shown in Fig. 28;
Fig. 30 is a cross-sectional view taken along the line B-B of Fig. 29;
Fig. 31 is an explanatory diagram of burrs formed by punching a shutter;
Fig. 32 is an explanatory diagram of the relationship between the burrs and bending positions in the shutter;
Fig. 33 is an explanatory diagram of the relationship between the burrs and bending positions in the shutter;
Fig. 34 is an enlarged view of a portion C shown in Fig. 28;
Fig. 35 is an explanatory diagram of the operation of the hub-rotation preventing means of the conventional magnetic tape cassette;
Fig. 36 is a bottom perspective view of another conventional magnetic tape cartridge;
Fig. 37 is an exploded perspective view for explaining a procedure for fitting a shutter of the magnetic tape cartridge to a body case; and
Fig. 38 is a cross-sectional view taken along the line A - A of Fig. 37.

### DETAILED DESCRIPTION OF THE PREFERRED EMBODIMENTS

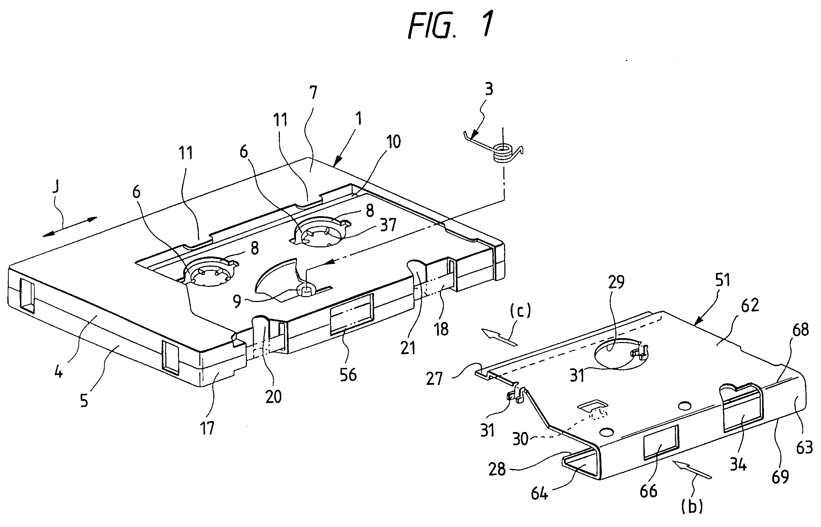

Figs. 1 to 5 show a first embodiment of a magnetic tape cartridge in accordance with the present invention.

The magnetic tape cartridge in this embodiment is a digital compact cartridge (DCC) for recording information such as music and images by means of digital signals. As illustrated in the drawings, the magnetic tape cartridge comprises a cartridge body 1 accommodating therein a magnetic tape or the like, a shutter 51 which is slidably attached to the cartridge body 1, and a spring 3 interposed between the cartridge body 1 and the shutter 51 so as to urge the shutter 51 into a closed position.

The cartridge body 1 and the spring member 3 are identical to the conventional ones shown in Fig. 28. The cartridge body 1 presents a substantially box-shaped outer appearance by means of a pair of upper and lower cartridge halves 4, 5 formed by the injection molding of a synthetic resin. Accommodated therein are a pair of reel hubs 6 for winding a magnetic tape 18 therearound, guide rollers permitting the stable running of the magnetic tape 18 wound around the reel hubs 6, and other component parts.

In addition, the following features are formed in a bottom wall portion 7 of the lower cartridge half 4 serving as a cartridge bottom: hub holes 8 for allowing tape drive shafts (hub drive shafts) in a digital recording/reproducing apparatus or the like to be inserted in the reel hubs 6; a spring-loading recess 9 for accommodating the spring member 3; a bottom guide groove 10 extending in a longitudinal direction of the cartridge (in the direction of arrow J in Fig. 1) for restricting the sliding direction of the shutter 51; and bottom-retaining pieces 11 provided so as to extend over the bottom guide groove 10 to retain an edge of the shutter 51 inserted in the bottom guide groove 10.

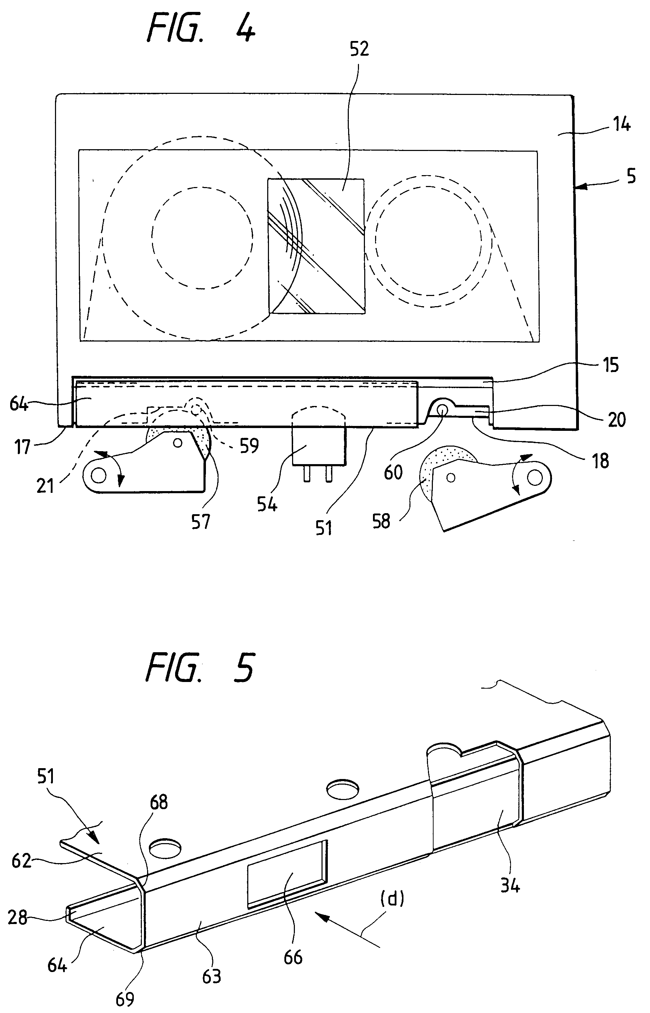

As shown in Figs. 3 and 4, an upper guide groove 15 extending in the longitudinal direction of the cartridge for restricting the sliding direction of the shutter 51 in the same way as the above-described bottom guide groove 10 is formed in an upper wall portion 14 of the upper cartridge half 5. In addition, as shown in Fig. 4, a window 52 made of a transparent resin is provided in the upper wall portion 14 of the upper cartridge half 5 so that it is possible to visually confirm the amount of magnetic tape wound around each reel hub 6 inside the cartridge body 1.

As shown in Figs. 1 and 4, a cartridge front surface 17 is formed by front wall portions of the lower cartridge half 4 and the upper cartridge half 5, and the magnetic tape 18 is accommodated in the cartridge body and runs adjacent the front surface 17 for reading and writing information. Formed in the cartridge front surface 17 are a magnetic head-inserting window 56 into which a magnetic head 54 of the digital recording/reproducing apparatus or the like is inserted, as well as pockets 20, 21 for entrance of pinch rollers, into which pinch rollers 57, 58 and capstans 59, 60 of the digital recording/reproducing apparatus are inserted.

It should be noted that the magnetic head-inserting window 56 does not require strict dimensional accuracy as compared to a conventional one, and its dimensions may be larger than those of the conventional magnetic head-inserting opening, and are set in accordance with the dimensional specifications of the magnetic tape cartridge.

In addition, a stepped-down or indented portion corresponding to the thickness of the shutter 51 is provided in the lower cartridge half 4 and the upper cartridge half 5 in the range where the shutter 51 slides, so that the cartridge surface including the shutter 51 is flat, i.e., coplanar.

The shutter 51 is designed to prevent dust and other debris from entering the cartridge body through an opening in the cartridge body 1 during storage or other periods of non-use, and to prevent the occurrence of fouling of the magnetic tape 18 should the user's fingers inadvertently contact the magnetic tape 18 exposed in the magnetic head-inserting window 56 and the pocket 20 for entrance of the pinch roller. The shutter 51 is formed integrally by blanking and bending a metallic thin-plate member in the same way as a conventional one.

More specifically, as illustrated in Fig. 1, the lower shutter portion 51 comprises a bottom wall portion 62 adapted to slide on the bottom wall portion 7 of the cartridge body, a front wall portion 63 adapted to slide over the cartridge front surface 17, and an upper wall portion 64 adapted to slide on the upper surface of the cartridge body 1.

The bottom wall portion 62 slides on the cartridge bottom surface to cover the hub holes 8, and is provided with a shaft-inserting opening 29 corresponding to the hub hole 8, a spring-engaging piece 30 for receiving an urging force from the spring member 3, and a hub-rotation preventing means 31 for preventing the rotation of the reel hub 6 inside the cartridge body 1 when the shutter is closed over the hub hole 8. In addition, as shown in Fig. 3, a horizontal flange 27, which extends in a horizontal direction in parallel with the surface of the bottom wall portion 7 and is inserted between the bottom guide groove 10 and the bottom-retaining pieces 11, is provided at a rear end of the bottom wall portion 62. The shaft-inserting opening 29, the spring-engaging piece 30, the hub-rotation preventing means 31, the horizontal flange 27 and the like are arranged in the same way as those shown in Fig. 28, so a description thereof is omitted.

The front wall portion 63 and the upper wall portion 64 slide over the cartridge front surface 17 and the upper wall portion 14 to cover the magnetic head-inserting window 56 and the pockets 20, 21 for entrance of the pinch rollers. A head-inserting opening 66 corresponding to the magnetic head-inserting window 56, a pinch roller opening 34 corresponding to the pocket 21 for entrance of the pinch roller, and the like are formed in the front wall portion 63. Although the pinch roller opening 34 is similar to the conventional one shown in Fig. 28, the head-inserting opening 66 is smaller than the magnetic head-inserting window 56 of the cartridge body 1, and is set to correspond to the dimensional specifications of the magnetic tape cartridge. In addition, the head-inserting opening 66 is punched in a direction indicated by arrow (b) in Figs. 1 and 3.

A vertical flange 28, which extends in a vertical direction perpendicular to the surface of the upper wall portion 14 of the cartridge body 1 and is inserted in the upper guide groove 15, is provided at a rear end of the upper wall portion 64, as shown in Figs. 1 and 3. This vertical flange 28 is similar to the conventional one shown in Fig. 28.

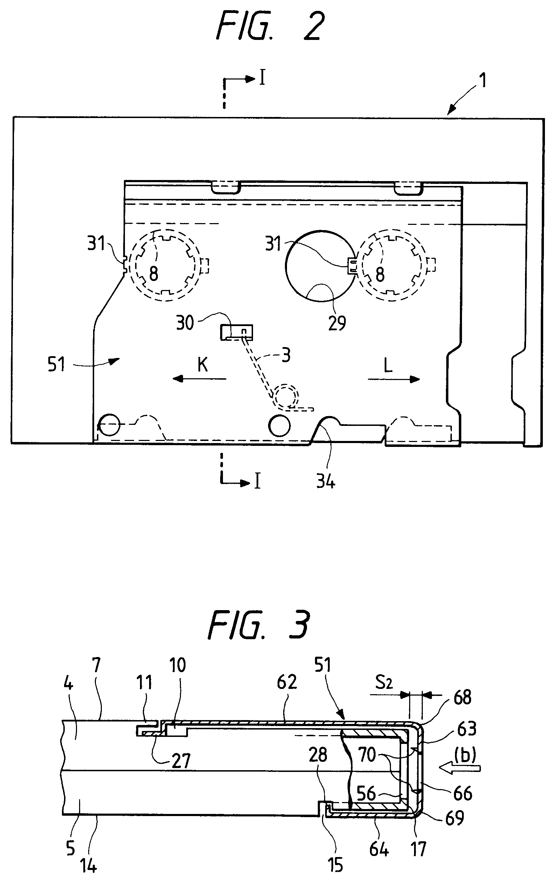

As shown in Figs. 1 and 2, a bent portion 68 between the bottom wall portion 62 and the front wall portion 63 and a bent portion 69 between the front wall portion 63 and the upper wall portion 64 are formed as curved surfaces having appropriate radii, respectively. The "appropriate radii" means a curved surface that is sufficiently small to leave the front wall portion 63 with a flat (i.e., vertical) portion (in cross section) which is larger than the standard size of the magnetic head-inserting opening.

The head-inserting opening 66 is punched in the direction (b) with dimensions corresponding to the dimensional specifications of the magnetic tape cartridge so as not to extend to the curved surfaces of the bent portions 68, 69. In addition, as shown in Fig. 1, the upper end side (the lower end side in Fig. 1) of the pinch-roller inserting port 34 may be provided so as not to extend all the way to the curved surface 69.

As indicated by arrow (c) in Fig. 1, the shutter 51 can be fitted to the cartridge body 1 by fitting the shutter over the cartridge body 1 from the cartridge front surface side so as to open the gap between the horizontal flange 27 and the vertical flange 28. The shutter 51 is slidable in the longitudinal direction of the cartridge through engagement between the horizontal flange 27 and the guide groove 10 in the bottom of the cartridge body 1 and engagement between the vertical flange 28 and the upper guide groove 15 in the cartridge body 1. The shutter 51 is urged by the spring 3 in the closing direction to cover the magnetic head-inserting window 56 and the pockets 20, 21 for entrance of the pinch rollers.

Fig. 2 shows a bottom view of the magnetic tape cartridge with the shutter 51 fitted to the cartridge body 1, and in which one end of the spring member 3 engages the spring-engaging piece 30 (the magnetic tape cartridge is not loaded in the digital recording/reproducing apparatus) so that the shutter 51 is urged in the direction of arrow K by the urging force of the spring member 3, thereby closing the openings in the cartridge body.

The digital recording/reproducing apparatus is provided with a shutter-opening device for moving the fitted shutter 51 of the magnetic tape cartridge in the direction of arrow L against the urging force of the spring member 3. As the magnetic tape cartridge is loaded in the digital recording/reproducing apparatus, the shutter 51 is moved in such a way that the shaft-inserting opening 29 in the shutter 51 coincides with the hub hole 8 in the cartridge body 1, thereby setting the shutter in an open state in which the magnetic head-inserting window 56 and the pockets 20, 21 for entrance of the pinch rollers are open. Fig. 4 is a top plan view of the magnetic tape cartridge and illustrates the position of the shutter 51 when in the open state.

As shown in Fig. 3, since the upper and lower ends of the head-inserting opening 66 formed in the front wall portion 63 of the shutter 51 are located inwardly of the curved surfaces of the bent portions 68, 69, burrs 70 formed in the punching of the head-inserting opening 66 project toward the cartridge front surface 17. Hence, there is no risk that the user's fingers will contact the burrs 70 when the user handles the magnetic tape cartridge.

Moreover, since the bent portions 68, 69 above and below the front wall portion 63 of the shutter 51 are curved surfaces, it is possible to maintain the gap S2 between the front wall portion 63 and the cartridge front surface 17, i.e., the front surface of the cartridge body 1, by a length greater than the projecting length of the burrs. Thus, by enlarging the gap S2 between the cartridge front surface 17 and the front wall portion 63, it becomes possible to prevent the burrs 70 from rubbing against the cartridge front surface thereby preventing the occurrence of shavings due to rubbing of the burrs 70. Further, it is no longer necessary to remove the burrs 70 in a separate processing operation.

In addition, since the bent portions 68, 69 having the curved surfaces remain above and below the head-inserting opening 66 formed in the front wall portion 63 of the shutter 51, it is possible to increase the strength of the shutter 51 by virtue of the curved shape of the shutter 51. Consequently, it becomes possible to prevent the occurrence of deformations caused by a lack of strength in the vicinity of the head-inserting opening 66 as well as to prevent destruction of the sliding characteristics and the attaching strength due to the deformation.

In addition, since the projecting direction of the burrs 70 are not changed by bending, and the dimensional accuracy of punching can be maintained, it is possible to improve the dimensional accuracy of the opening for the magnetic tape cartridge.

Although the bent portions 68, 69 above and below the front wall portion 63 of the shutter 51 are described as curved surfaces, the bent portions 68, 69 may instead be formed as inclined surfaces, as shown in Fig. 5, in which case it is possible to obtain similar operation and effects as those of the above-described embodiment.

In the shutter shown in Fig. 5, the head-inserting opening 66 is punched in the same manner as described above, i.e., so that the burrs project toward the front surface of the cartridge body, as indicated by arrow (d). Although the upper end side (lower side in Fig. 1) of the pinch-roller inserting port 34 in Fig. 1 is arranged so as not to extend to the curved surface, the upper end side of the pinch-roller inserting port 34 in Fig. 5 does extend all the way to the inclined surface.

Hereafter, a detailed description will be given of a second embodiment of the present invention.

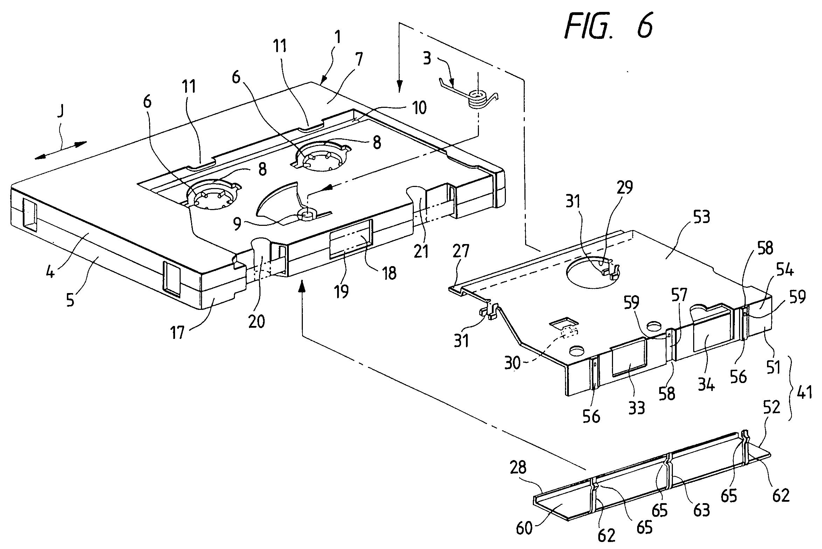

Figs. 6 to 12 show a second embodiment of a magnetic tape cartridge in accordance with the present invention.

The magnetic tape cartridge in this embodiment is a digital compact cartridge (DCC) for recording information such as music and images by means of digital signals. As illustrated in the drawings, the magnetic tape cartridge comprises a cartridge body 1 accommodating therein a magnetic tape or the like, a shutter 41 which is slidably attached to the cartridge body 1, a spring 3 interposed between the cartridge body 1 and the shutter 41 so as to urge the shutter 41 in a closed direction.

The cartridge body 1 and the spring member 3 are identical to conventional ones shown in Fig. 28. Namely, the cartridge body 1 presents a substantially box-shaped outer appearance by means of a pair of upper and lower cartridge halves 4, 5 formed by injection molding a synthetic resin. Accommodated therein are a pair of reel hubs 6 for winding a magnetic tape 18 therearound, guide rollers permitting the stable running of the magnetic tape 18 wound around the reel hubs 6, and other component parts.

In addition, the following are formed in a bottom wall portion 7 of the lower cartridge half 4 serving as a cartridge bottom: hub holes 8 for allowing tape drive shafts (hub drive shafts) in a digital recording/reproducing apparatus to be inserted in the reel hubs 6; a spring-loading recess 9 for accommodating the spring member 3; a bottom guide groove 10 extending in a longitudinal direction of the cartridge (in the direction of arrow J in Fig. 6) for restricting the sliding direction of the shutter 41; and bottom-retaining pieces 11 provided so as to extend over the bottom guide groove 10 to retain an edge of the shutter 41 inserted in the bottom guide groove 10.

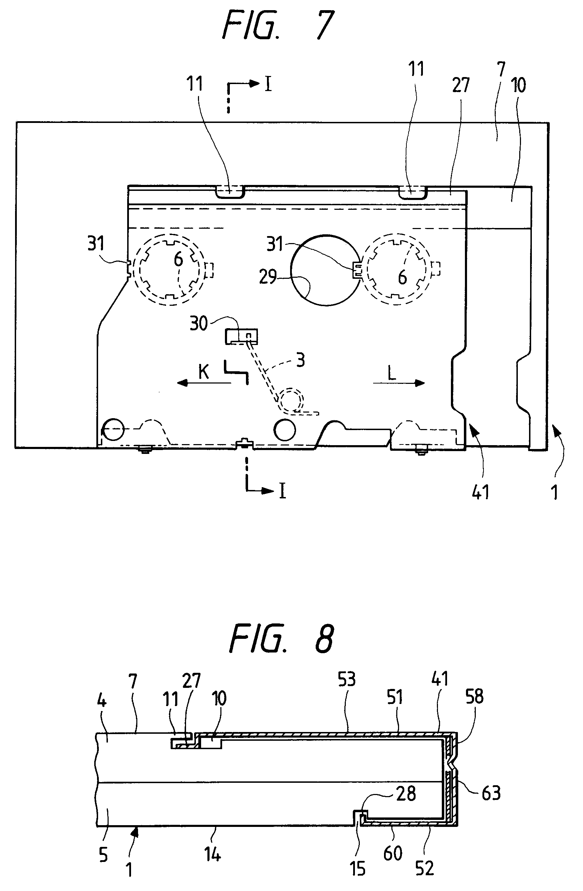

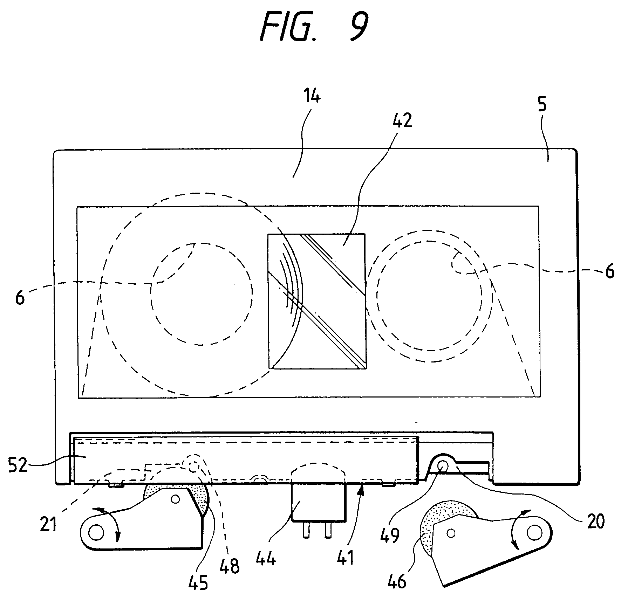

As shown in Figs. 8 and 9, an upper guide groove 15 extends in the longitudinal direction of the cartridge for restricting the sliding direction of the shutter 41 as described above, and a bottom guide groove 10 is formed in an upper wall portion 14 of the upper cartridge half 5. In addition, as shown in Fig. 9, a window 42 made of a transparent resin is provided in the upper wall portion 14 of the upper cartridge half 5 to make it possible for the user to visually confirm the amount of magnetic tape wound around each reel hub 6 inside the cartridge body.

As shown in Figs. 6 and 9, the cartridge front surface 17 is formed by front wall portions of the lower cartridge half 4 and the upper cartridge half 5, and the magnetic tape 18 runs adjacent to the front surface 17 for reading and writing information. Formed in the cartridge front surface 17 are a magnetic head-inserting window 19 into which a magnetic head 44 of the digital recording/reproducing apparatus is inserted, as well as pockets 20, 21 into which pinch rollers 45, 46 and capstans 48, 49 of the digital recording/reproducing apparatus are inserted.

In addition, a stepped-down portion (an indented portion) corresponding to the thickness of the shutter 41 is provided in the lower cartridge half 4 and the upper cartridge half 5 in the range where the shutter 41 slides, so that the cartridge surface including the shutter 41 becomes flat, i.e., coplanar.

The shutter 41 is designed to prevent dust and other debris from entering the cartridge body through an opening in the cartridge body 1 during storage and other periods of non-use, and to prevent fouling of the magnetic tape 18 when the user's fingers inadvertently contact the magnetic tape 18 which is exposed in the magnetic head-inserting window 19 and the pocket 20 for entrance of the pinch roller. As shown in Fig. 6, the shutter 41 is formed as an assembly of a lower shutter portion 51 and an upper shutter portion 52.

The lower shutter portion 51 is formed integrally by blanking and bending a metallic thin-plate member. As illustrated in the drawings, the lower shutter portion 51 is comprised of a bottom wall portion 53 adapted to slide on the cartridge bottom surface so as to cover the hub hole 8 as well as a front wall portion 54 extending vertically from the front end of the bottom wall portion 53 and adapted to slide over the cartridge front surface so as to cover the magnetic head-inserting window 19 and the pockets 20, 21 for entrance of the pinch rollers.

The bottom wall portion 53 is provided with a shaft-inserting opening 29 corresponding to the hub hole 8, a spring-engaging piece 30 for receiving an urging force from the spring member 3, and a hub-rotation preventing means 31 for preventing the rotation of the reel hub 6 inside the cartridge body 1 when the shutter is in the closed position with the hub hole 8 closed. In addition, as shown in Fig. 8, a horizontal flange 27, which extends in a horizontal direction in parallel with the surface of the bottom wall portion 7 and is inserted between the bottom guide groove 10 and the bottom-retaining pieces 11, is provided at a rear end of the bottom wall portion 53. The shaft-inserting opening 29, the spring-engaging piece 30, the hub-rotation preventing means 31, the horizontal flange 27 and the like are arranged in the same way as those shown in Fig. 28, so a description thereof is omitted.

A head-inserting opening 33 corresponding to the magnetic head-inserting window 19 and a pinch roller opening 34 corresponding to the pocket 21 for entrance of the pinch roller are formed in the front wall portion 54. Retaining-piece fitting portions 56, 57, which serve as connecting means for connecting and fixing together the lower shutter portion 51 and the upper shutter portion 52 with the shutter fitted to the cartridge body 1, are also formed in the front wall portion 54. The head-inserting opening 33 and the pinch roller opening 34 are identical to the conventional ones shown in Fig. 28.

The retaining-piece fitting portion 56 is arranged as follows. A retaining-piece inserting groove 58 having a fixed width and extending along the vertical direction (i.e., in the direction of thickness of the cartridge body 1) in the front wall portion 54 is formed by means of stamping or the like, and an engaging hole 59 for engagement by a retaining projection is formed in a wall portion facing the retaining-piece inserting groove 58. This retaining-piece fitting portion 56 is provided on both sides of the front wall portion 54. The retaining-piece fitting portion 57 differs only in the stamping direction on the front wall portion 54, and its arrangement in which the retaining-piece inserting groove 58 and the engaging hole 59 are provided is the same.

The upper shutter portion 52 is arranged such that an upper wall portion 60 adapted to slide on the cartridge upper surface and retaining pieces 62, 63, which serve as connecting means for connecting and fixing together the lower shutter portion 51 and the upper shutter portion 52 with the shutter fitted to the cartridge body 1 are formed by blanking and bending a metallic thin-plate member.

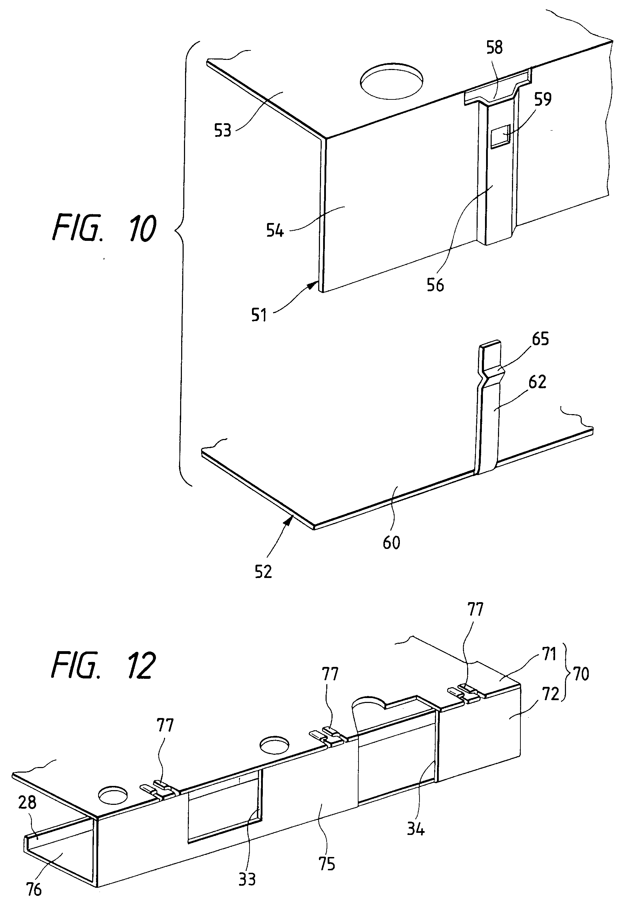

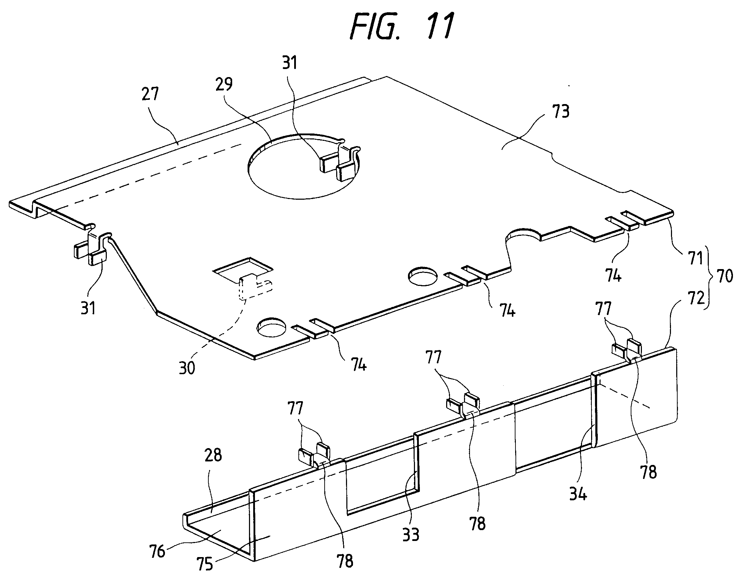

As shown in Figs. 6 and 8, a vertical flange 28, which extends in a vertical direction perpendicular to the surface of the upper wall portion 14 of the cartridge body 1 and is inserted in the upper guide groove 15, is provided at a rear end of the upper wall portion 60. The retaining pieces 62, 63 are strip-shaped columns extending vertically from the front end of the upper wall portion 60 and are inserted into the retaining-piece inserting grooves 58 in the retaining-piece fitting portions 56, 57. The retaining pieces 62, 63 are respectively provided with retaining projections 65 for engaging the engaging holes 59 in the retaining-piece fitting portions 56, 57 (see Fig. 10) to secure the upper shutter portion 52.

It should be noted that since the projecting directions are reversed in the retaining-piece fitting portion 56 and the retaining-piece fitting portion 57, the projecting directions of the projections 65 are reversed in the corresponding retaining pieces 62 and 63.

In accordance with the above-described arrangement, the lower shutter portion 51 and the upper shutter portion 52 can be fitted to the cartridge body 1 separately. The horizontal flange 27 is inserted into the bottom guide groove 10 with the horizontal flange 27 side inclined downward so that the lower shutter portion 51 is separately fitted to the bottom wall portion 7 without having the hub-rotation preventing means 31 becoming caught by the front surface 17 of the cartridge body 1.

The upper shutter portion 52 can also be fitted simply as the upper shutter portion 52 is directly placed on the upper wall portion 14 by allowing the vertical flange 28 to enter the upper guide groove 15. When the lower shutter portion 51 and the upper shutter portion 52 are fitted to the cartridge body 1, the retaining pieces 62, 63 of the upper shutter portion 52 are inserted in the retaining-piece fitting portions 56, 57 of the lower shutter portion 51, and the retaining projections 65 of the retaining pieces 62, 63 are engaged in the engaging holes 59 in the retaining-piece fitting portions 56, 57. Consequently, the lower shutter portion 51 and the upper shutter portion 52 fitted to the cartridge body 1 are connected and fixed together, thereby obtaining the integrated shutter 41.

Accordingly, the shutter 41 is capable of avoiding the conventional problems in which the hub-rotation preventing means 31 and the like as well as the inwardly projecting portions interfere with the front and outer surfaces of the cartridge during the fitting of the shutter 41 to the cartridge body 1. Furthermore, it is possible to fit the shutter 41 to the cartridge body easily and quickly, thereby improving the manufacturing productivity and efficiency. In addition, since the fitting of the shutter 41 is facilitated, it is possible to also reduce the clearance between the shutter 41 and the cartridge body 1.

As shown in Fig. 8, the shutter 41 in which the upper and lower shutter portions 51, 52 are integrated is slidable in the longitudinal direction of the cartridge with respect to the cartridge body 1 by means of engagement between the horizontal flange 27 of the lower shutter portion 51 and the bottom guide groove 10 of the cartridge body 1, as well as by engagement between the vertical flange 28 of the upper shutter portion 52 and the upper guide groove 15 of the cartridge body 1. The shutter is urged in the direction of closing the magnetic head-inserting window 19 and the pockets 20, 21 for entrance of the pinch rollers by means of the spring member 3.

Fig. 7 shows a bottom view of the magnetic tape cartridge with the shutter 41 fitted to the cartridge body 1. One end of the spring member 3 engages the spring-engaging piece 30, and when the magnetic tape cartridge is not loaded in the digital recording/reproducing apparatus, the shutter 41 is urged in the direction of arrow K by the urging force of the spring member 3, thereby closing the opening in the cartridge body 1. The digital recording/reproducing apparatus is provided with a shutter-opening device for moving the fitted shutter 41 in the direction of arrow L against the urging force of the spring member 3. As the magnetic tape cartridge is loaded in the digital recording/reproducing apparatus, the shutter 41 is moved so that the shaft-inserting opening 57 in the shutter 41 coincides with the hub hole 8 in the cartridge body 1, thereby opening the magnetic head-inserting window 19 and the pockets 20, 21 for entrance of the pinch rollers. Fig. 9 is a top plan view of the magnetic tape cartridge and illustrates the position of the rear shutter 41 when the shutter is open.

Figs. 11 and 12 show a modified version of the shutter according to the second embodiment. In the description that follows, those arrangements that are identical to conventional ones and those that are identical to the above-described embodiment are denoted by the same reference numerals, and a description thereof is omitted.

The shutter 70 in Figs. 11 and 12 is designed to prevent dust and other debris from entering the cartridge body through an opening in the cartridge body 1 during storage and other periods of non-use, and to prevent fouling of the magnetic tape 18 when the user's fingers are inadvertently brought into contact with the magnetic tape 18 which is exposed in the magnetic head-inserting window 19 and the pocket 20 for entrance of the pinch roller. As shown in Fig. 11, the shutter 2 is an assembly of a lower shutter portion 71 and an upper shutter portion 72, and the lower shutter portion 71 and the upper shutter portion 72 are formed integrally by blanking and bending of a metallic thin-plate member as described above.

The lower shutter portion 71 is comprised of a bottom wall portion 73 adapted to slide on the cartridge bottom surface so as to cover the hub hole 8, as well as three pairs of slits 74 formed at a front end portion of the bottom wall portion 73 and serving as connecting means for connecting and fixing together the lower shutter portion 71 and the upper shutter portion 72 with the shutter fitted to the cartridge body 1.

The upper shutter portion 72 is comprised of a front wall portion 75 adapted to slide on the cartridge bottom surface so as to cover the magnetic head-inserting window 19 and the pockets 20, 21 for entrance of the pinch rollers, an upper wall portion 76 continuing vertically from the lower end of this front wall portion 75 and adapted to slide on the cartridge upper surface, and retaining pawls 77 serving as connecting means for connecting and fixing together the lower shutter portion 71 and the upper shutter portion 72 with the shutter fitted to the cartridge body 1.

The retaining pawls 77 are respectively provided so as to extend upright on both sides of supporting pieces 78 which extend horizontally from the lower end (upper end in Figs. 11 and 12) of the front wall portion 75. After the retaining pawls 77 are inserted into the slits 74, those portions that project above the bottom wall portion 73 are bent, as shown in Fig. 12, to connect and fix the lower shutter portion 71 and the upper shutter portion 72.

The lower shutter portion 71 and the upper shutter portion 72 can be fitted to the cartridge body 1 separately, and can be fitted simply without causing the hub-rotation preventing means 31 and the like to be caught by the cartridge front surface 17 of the cartridge body 1. Then, when the lower shutter portion 71 and the upper shutter portion 72 are fitted to the cartridge body 1, the retaining pawls 77 of the upper shutter portion 72 are inserted into the slits 74 in the lower shutter portion 71, and the retaining pawls 77 projecting from the lower are caulked. Consequently, the lower shutter portion 71 and the upper shutter portion 72 which are fitted to the cartridge body 1 are connected and fixed together to form an integrated shutter 70.

Accordingly, it is possible to avoid problems such as the hub-rotation preventing means 31 and the like interfering with the cartridge front surface during the fitting of the shutter 70 to the cartridge body 1. Furthermore, it is possible to fit the shutter 70 to the cartridge body 1 easily and quickly, thereby making it possible to improve the manufacturing and assembling productivity of the magnetic tape cartridges.

Although, in the foregoing embodiments, the shutter is formed as an assembly of two shutter portions, the number of dividing portions are not confined to that of the foregoing embodiments, and an assembly of three or more shutter portions may be used. In addition, the connecting means for connecting and fixing together the constituent shutter portions are not limited to those of the foregoing embodiments, and various known connecting techniques may be applied.

In addition, in the foregoing embodiments, the depth of the retaining-piece inserting grooves 58 of the retaining-piece fitting portions 56, 57 and the thickness of the retaining pieces 62 or the retaining pawls 77, for instance, are illustrated in exaggerated form to facilitate an understanding of the invention. In actuality, however, the thickness of the thin-plate member which is used for the shutter is very small, so that conspicuously irregular surfaces are not produced in the engaging portions and the like of the connecting means.

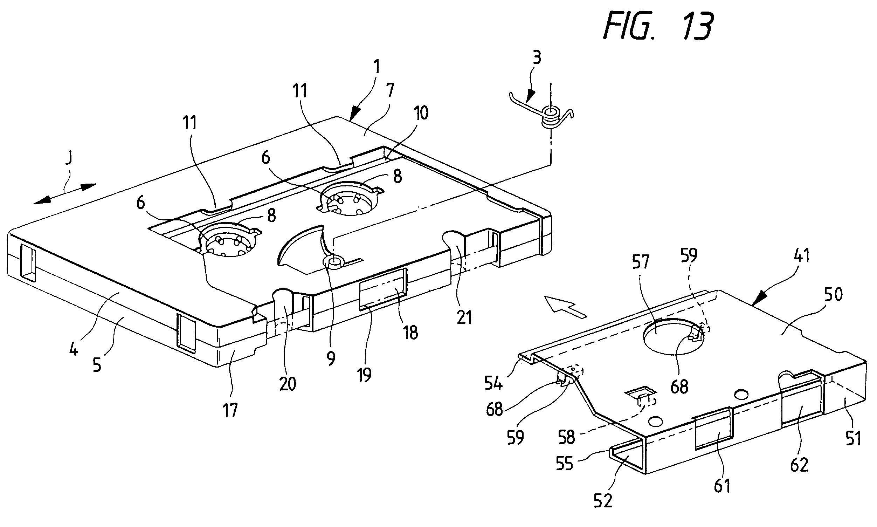

Hereafter, a detailed description will be given of a third embodiment of the present invention, as shown in Figs. 13-16.

The magnetic tape cassette in this embodiment is a digital compact cassette (DCC) for recording information such as music and images by means of digital signals. As illustrated in the drawings, the magnetic tape cassette comprises a cassette body 1 accommodating therein a magnetic tape or the like, a shutter 41 slidably attached to the cassette body 1, a spring 3 interposed between the cassette body 1 and the shutter 41 to urge the shutter 41 attached to the cassette body 1 to a closed position.

The cassette body 1 and spring 3 are identical to the conventional one shown in Fig. 28. The cassette body 1 presents a substantially box-shaped outer appearance by means of a pair of upper and lower cassette halves 4, 5 formed by the injection molding of a synthetic resin. Accommodated therein are a pair of reel hubs 6 for winding a magnetic tape 18 therearound, guide rollers permitting the stable running of the magnetic tape 18 wound around the reel hubs 6, and other component parts.

In addition, the following are formed in a bottom wall portion 7 of the lower cassette half 4 serving as a cassette bottom: hub holes 8 for allowing tape drive shafts (hub drive shafts) in a digital recording/reproducing apparatus or the like to be inserted in the reel hubs 6; a spring-loading recess 9 for accommodating the spring member 3; a bottom guide groove 10 extending in a longitudinal direction of the cassette (in the direction of arrow J in Fig. 13) for restricting the sliding direction of the shutter 41; and bottom-retaining pieces 11 provided so as to extend over the bottom guide groove 10 to retain an edge of the shutter 41 inserted in the bottom guide groove 10.

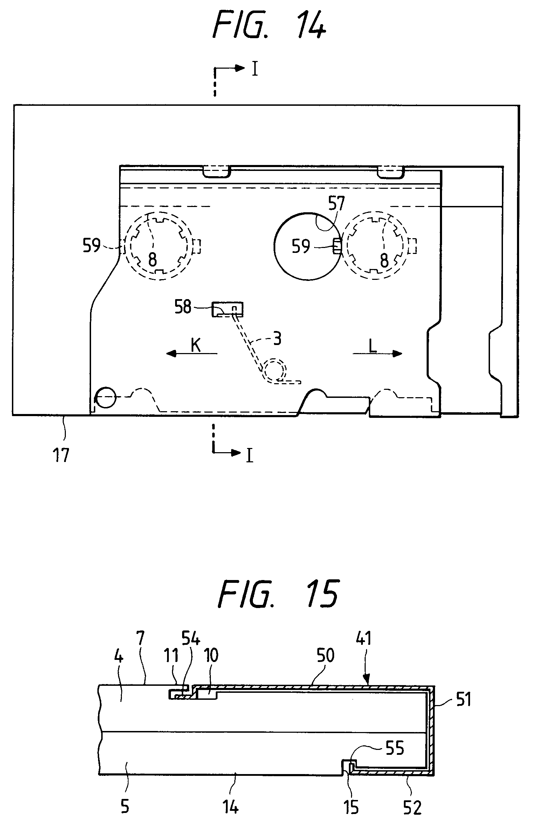

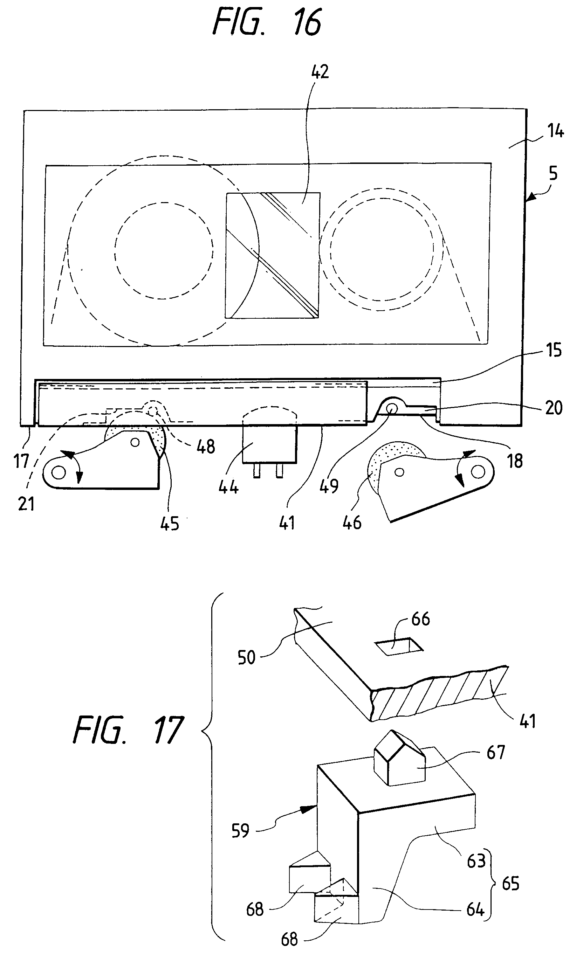

As shown in Figs. 15 and 16, an upper guide groove 15 extending in the longitudinal direction of the cassette for restricting the sliding direction of the shutter 41 in the same way as the above-described bottom guide groove 10 is formed in an upper wall portion 14 of the upper cassette half 5. In addition, as shown in Fig. 16, a window 42 made of a transparent resin is provided in the upper wall portion 14 of the upper cassette half 5 so that the user can visually confirm the amount of magnetic tape wound around each reel hub 6 inside the cassette body 1.

In addition, as shown in Figs. 13 and 16, a cassette front surface 17 is formed by front wall portions of the lower cassette half 4 and the upper cassette half 5, and the magnetic tape 18 accommodated in the cassette body 1 runs adjacent the cassette front surface 17 for reading and writing information. Formed in the cassette front surface 17 are a magnetic head-inserting window 19 into which a magnetic head 44 of the digital recording/reproducing apparatus is inserted, as well as pockets 20, 21 into which pinch rollers 45, 46 and capstans 48, 49 of the digital recording/reproducing apparatus are inserted.

In addition, a stepped-down or indented portion corresponding to the thickness of the shutter 41 is appropriately provided in the lower cassette half 4 and the upper cassette half 5 in the range where the shutter 41 slides, so that the cassette surface and the surface of the shutter 41 are flat, i.e., coplanar.

The shutter 41 is designed to prevent dust or other debris from entering the cassette body 1 through an opening in the cassette body 1 during storage or other periods of non-use, and to prevent the occurrence of fouling of the magnetic tape 18 when the operator's fingers are inadvertently brought into contact with the magnetic tape 18 which is exposed in the magnetic head-inserting window 19 and the pocket 20 for entrance of the pinch roller. As shown in Fig. 13, the shutter 41 has an integral structure formed by bending a metal thin plate, and comprises a bottom wall portion 50 for covering the hub holes 8 in the cassette bottom surface, as well as an upper wall portion 52 and a front wall portion 51 for covering the magnetic head-inserting window 19 and the pockets 20, 21 for entrance of the pinch rollers, which are located in the cassette front surface.

As shown in Fig. 15, a horizontal flange 54, which extends in a horizontal direction in parallel with the surface of the bottom wall portion 7 and is inserted between the bottom guide groove 10 and the bottom-retaining pieces 11, is provided at a rear end of the bottom wall portion 50. A vertical flange 55, which extends in a vertical direction perpendicular to the surface of the upper wall portion 14 and is inserted in the upper guide groove 15, is provided at a rear end of the upper wall portion 52.

The bottom wall portion 50 is provided with a shaft-inserting opening 57 corresponding to the hub hole 8, a spring-engaging piece 58 for receiving an urging force from the spring member 3, and a hub-rotation preventing means 59 for preventing the rotation of the reel hub 6 inside the cassette body 1 when the shutter is in the closed state with the hub hole 8 closed. The front wall portion 51 is provided with a head-inserting opening 61 corresponding to the magnetic head-inserting window 19 and a pinch roller opening 62 corresponding to the pocket 21 for entrance of the pinch roller.

The above-described shutter 41 is fitted to the cassette body 1 as portions of the bottom wall portion 50 and the upper wall portion 52 are resiliently deformed, and the horizontal flange 54 and the vertical flange 55 are engaged in the predetermined grooves, thereby preventing the shutter 41 from coming off the cassette body 1.

Fig. 14 shows a bottom view of the magnetic tape cassette with the shutter 41 fitted to the cassette body 1. One end of the spring member 3 engages the spring-engaging piece 58 and, when the magnetic tape cassette is not loaded in the digital recording/reproducing apparatus, the shutter 41 is urged in the direction of arrow K by the urging force of the spring member 3 thereby closing the openings in the cassette body 1. The digital recording/reproducing apparatus is provided with a shutter-opening device for moving the fitted shutter 41 in the direction of arrow L against the urging force of the spring member 3. As the magnetic tape cassette is loaded in the digital recording/reproducing apparatus, the shutter 41 is moved in such a way that the shaft-inserting opening 57 in the shutter 41 coincides with the hub hole 8 in the cassette body 1, thereby setting the shutter in an open state in which the magnetic head-inserting window 19 and the pockets 20, 21 for entrance of the pinch rollers in the cassette body 1 are open. Fig. 16 is a top plan view of the magnetic tape cassette and illustrates the position of the rear shutter 41 when the shutter is in the open state.

The hub-rotation preventing means 59 is an integrally molded product made of a synthetic resin and, as shown in Fig. 17, it comprises a main-body block 65 having a substantially L-shaped side configuration and including a baseplate portion 63 for abutting against the rear surface of the bottom wall portion 50 of the shutter 41 and a column portion 64 protruding from the baseplate portion 63 and adapted to be inserted into the hub hole 8. A bar-like portion 67 protrudes from the baseplate portion 63 and is adapted to be inserted into a rotation-preventing-means attaching hole 66 provided in the bottom wall portion 50, and a pair of hub-retaining projections 68 protrude from a distal end of the column portion 64 perpendicular thereto, i.e., in the sliding direction of the shutter 41. The rod-shaped portion 67 has a cross section of, for instance, a quadrangular prismatic shape, and its distal end is pointed in the shape of a ridge.

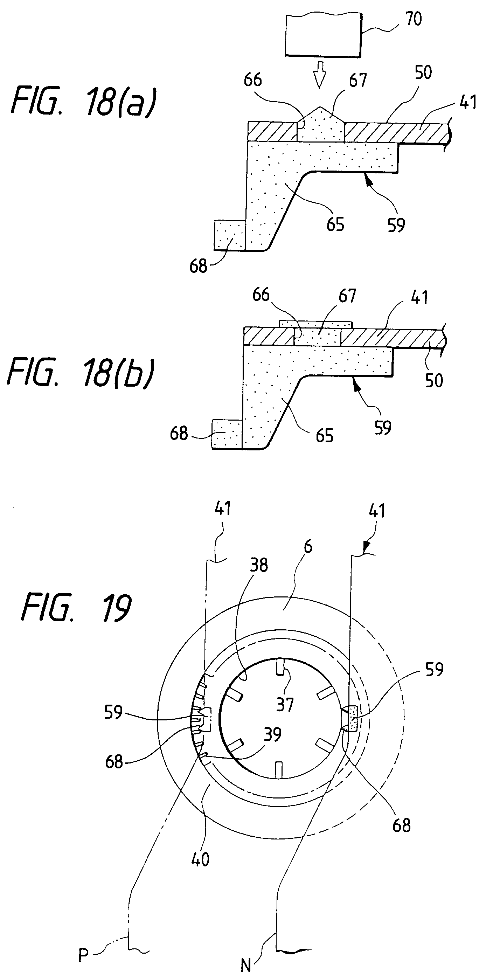

As shown in Fig. 18(a), the rod-shaped portion 67 is fitted in the rotation preventing means attaching hole 66 in the bottom wall portion 50, and the distal end of the rod-shaped portion 67 projecting above the upper surface of the bottom wall portion 50 is melted by an ultrasonic welder 70 so that the rotation preventing means 59 is welded onto the shutter 41, as shown in Fig. 18(b). The quadrangular cross-sectional configuration of the rod-shaped portion 67 serves to prevent the rotation of the hub-rotation preventing means 59 fitted in the rotation preventing means attaching hole 66, and the pointed distal end of the rod-shaped portion 67 facilitates the ultrasonic welding process.

The reel hub 6 is configured so that, as shown in Fig. 19, a gear portion 40 having rotation-preventing internal teeth 39 is provided on an inner peripheral portion 38 of the reel hub 6 concentrically with the inner peripheral portion 38 which is provided with hub pawls 37 for engaging the tape-driving shaft of the digital recording/reproducing apparatus. When the shutter 41 is open as indicated by reference character N in the drawing, the hub-retaining projections 68 retreat to a region between the rotation-preventing internal teeth 39 and the hub pawls 37 so as to allow rotation of the reel hub 6. When the shutter 41 is closed as indicated by reference character P, the hub-retaining projections 68 protrude between adjacent ones of the rotation-preventing internal teeth 39, thereby preventing rotation of the reel hub 6.

The hub-rotation preventing means 59 is formed by the integral molding of a synthetic resin separately from the shutter 41 which is formed by providing a metallic thin plate with a series of sheet metal working operations such as blanking and bending. The accuracy with which the hub-retaining projections 68 are attached depends on the punching accuracy of the rotation-preventing-means attaching hole 66 in the shutter 41 and the molding accuracy of the hub-rotation preventing means 59 by means of injection molding or the like. It is therefore relatively easy to improve the accuracy of each process when carried out separately.

Accordingly, it is possible to provide a shutter 41 with precisely manufactured hub-retaining projections 68 and in which the number of bending operations for forming the shutter 41 are greatly reduced. It is thus possible to prevent the occurrence of problems attributable to decreased dimensional accuracy, such as a decrease in the product yield and a decline in the function of preventing the rotation of the reel hub 6. At the same time, it is possible to reduce the production cost and improve efficiency.

Since the hub-retaining projections 68 are formed by molding a synthetic resin, the width, the projecting height and the like of the projections can be accurately and precisely obtained unlike the case where the hub-retaining projections 68 are formed by bending a thin plate. Hence, the reel hubs 6 can be positioned and fixed more accurately. Also, it is possible to prevent the rattling of the reel hubs 6 when the shutter is closed.

Furthermore, since the hub-retaining projections 68 are formed of a resin having a hardness equivalent to that of the rotation-preventing internal teeth 39, it is possible to prevent shavings or other debris generated by the engagement of the rotation-preventing internal teeth 39 and the hub-retaining projections 68, thereby making it possible to avoid fouling the magnetic tape or the like due to the presence of the shavings or other debris.

Although, in the above-described embodiment, the hub-rotation preventing means 59 is formed as an integral structure using a synthetic resin, the effect of improved accuracy due to the reduction in the number of bending operations of the metallic or other similar thin plate and the effect of the prevention of occurrence of shavings or other debris can also be attained if only the hub-retaining projections for engaging the rotation-preventing internal teeth 39 are formed of a synthetic resin.

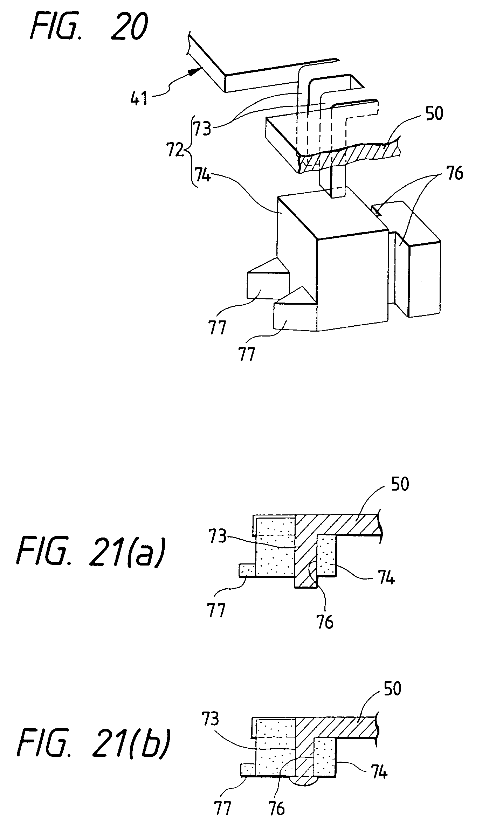

Figs. 20 to 24 show an arrangement of the hub-rotation preventing means in a modified version of the third embodiment.

In the example shown in Fig. 20, a hub-rotation preventing means 72 for preventing the rotation of the reel hub comprises a pair of column pieces 73 extending upwardly on the bottom wall portion 50 of the shutter 41, as well as a main-body block 74 which engages the column pieces 73 and is an integrally molded product made of a synthetic resin. The column pieces 73 are formed by bending a portion of the bottom wall portion 50 of the shutter 41. Tips of the columns 73 extend farther from the bottom wall portion than the main-body block 74, as shown in Fig. 21(a). In addition, the main-body block 74 comprises a pair of groove portions 76 to which the pair of column pieces 73 are fitted and a pair of hub-retaining projections 77 projecting in a sliding direction perpendicular to the column pieces 73.

As shown in Fig. 21(a), the main-body block 74 is positioned on the bottom wall portion 50 by inserting the column pieces 73 into the groove portions 76. Then, as shown in Fig. 21(b), the main-body block 74 is secured to the bottom wall portion 50 by causing the tips of the column pieces 73 projecting from the groove portions 76 to be caulked by making use of appropriate processing means such as bending, crushing and the like.

Although the column pieces 73 are bent from the bottom wall portion 50, since the hub-retaining projections 77 are not formed by bending, intricate bending of the shutter 41 is not required, so that it is possible to obtain advantages similar to those described above.

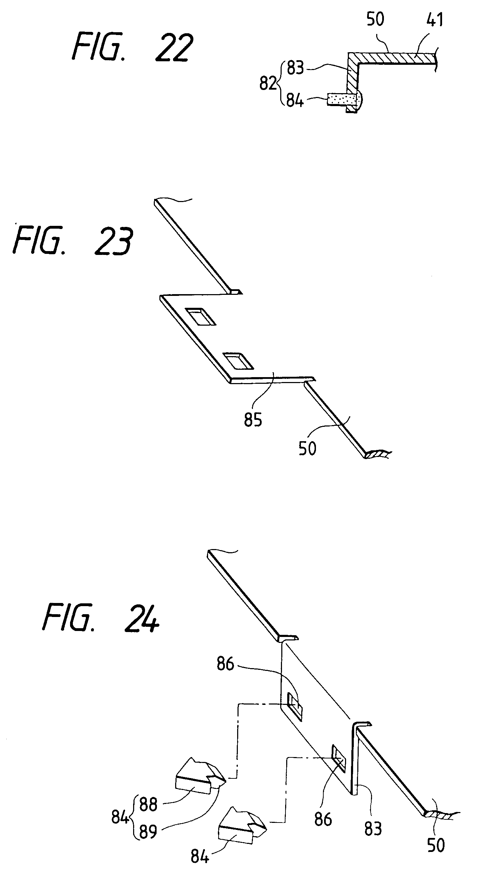

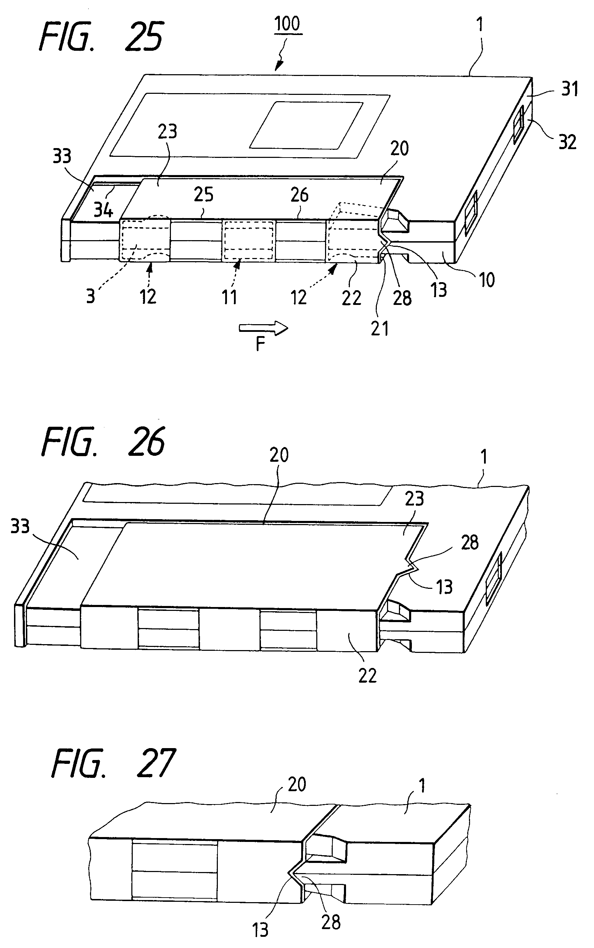

In another modified version of the third embodiment, as shown in Figs. 22 to 24, a hub-rotation preventing means 82 for preventing the rotation of the reel hub comprises one column piece 83 provided so as to extend upwardly on the bottom wall portion 50 of the shutter 41 and a pair of hub-retaining projections 84 attached to the column piece 83. The column piece 83 is obtained as a column piece portion 85 blanked in such a manner as to extend from a portion of the bottom wall portion 50 of the shutter 41, as shown in Fig. 23. The column piece 83 is then bent to achieve the structure shown in Figs. 22 and 24. A pair of projection-attaching holes 86 for fitting the hub-retaining projections 84 are provided.

Each of the hub-retaining projections 84 comprises a wedge-shaped retaining portion 88 for engaging the internal teeth 39 for the prevention of rotation of the reel hub 6, as well as an inserting shaft portion 89 which projects from the proximal end of the retaining portion 88 and is inserted into the projection-attaching hole 86. The inserting shaft portion 89 has a transverse cross-sectional shape of a square and has the same dimensions as the projection-attaching hole 86, and its distal end is pointed in the shape of a ridge. After the inserting shaft portion 89 is inserted into the projection-attaching hole 86, the distal end of the inserting shaft portion 89 projecting to the rear surface side of the column piece 83 is subjected to ultrasonic welding. Each of the hub-retaining projections 84 is thereby fixed to the column piece 83.

The column piece 83 can therefore be obtained by a single bending of the bottom wall portion 50, and since the number of bending operations is thus reduced as compared to the conventional structure shown in Fig. 34, it is possible to obtain advantages similar to those described above.

It should be noted that the shape of the hub-retaining projection provided to project from the shutter 41 as well as the number of the hub-retaining projections provided are not limited to those described above. Although, in each of the above-described embodiments, a pair of hub-retaining projections are provided, it is naturally conceivable to adopt an arrangement in which one or three or more hub-retaining projections are provided.

Hereafter, a detailed description will be given of a magnetic tape cartridge in accordance with a fourth embodiment of the present invention.

As shown in Fig. 25, the magnetic tape cartridge 100 is constructed so that a magnetic tape 3 wound around a pair of reel hubs (not shown) is accommodated inside a body case 1 having the shape of a hollow box formed by abutting an upper half case 31 and a lower half case 32. The shutter 20 is fitted in the same way as the conventional structure described above.

A head-inserting window 11 and pockets 12 for entrance of pinch rollers are provided in a front surface wall 10 of the body case 1 to form a traveling path of the magnetic tape 3. A shutter sliding surface 33 is recessed with a stepped-down portion lower than the remaining portion of the body 1, a guide groove 34 is provided in the shutter sliding surface 33 over an entire width thereof, and a bent portion (not shown) of the shutter 20 is slidably engaged therein. Consequently, the sliding movement of the shutter 20 is smooth.

The shutter 20 is a metallic member having a substantially U-shaped cross section in which openings 25 and 26 having the same shapes as the head-inserting window 11 and the pockets 12 for entrance of the pinch rollers are formed in a front surface plate 22. The shutter 20 is fitted to the body case 1 so as to sandwich the body case 1 between a lower surface plate 21 and an upper surface plate 23.

The shutter 20 is urged in the direction of arrow F by a spring member (not shown) so as to be normally biased toward the right-hand side end, as viewed in Fig. 25. The head-inserting window 11 and the pockets 12 for entrance of the pinch rollers are closed when the shutter 20 is biased toward the right-hand side end of the cartridge 100.

When recording or reproduction is effected, the magnetic tape cartridge 101 is loaded on the recording/reproducing apparatus, and the shutter 20 slides toward the left-hand side in Fig. 25 on the shutter sliding surface 33 against the urging force of the spring (not shown) so as to expose the head-inserting window 11 and the pockets 12 for entrance of the pinch rollers in the body case 1. Then, the magnetic head and the pinch rollers (not shown) of the magnetic recording/reproducing apparatus are inserted into the respective openings.

As shown in Fig. 25, a projection 28 which is pointed substantially in a triangular shape is formed at an edge on the urging-direction side (the side in the direction of arrow F) of the front surface 10 of the shutter 20, and a substantially triangular recess 13 having a shape corresponding to the projection 28 of the shutter 20 is formed at an edge, located on the side away from the urging direction, of the front surface wall 10 of the body case 1. The projection 28 and the recess 13 are fitted to each other by the urging force with the shutter 20 closed, whereby the shutter 20 is positioned in place.

Accordingly, during the storage of the cartridge, i.e., in the state in which the shutter 20 is closed, the projection 28 of the shutter 20 and the recess 13 in the body case 1 are engaged with an appropriate pressure-contacting force, and the swinging of the shutter 20 in the thickness direction of the body case is suppressed effectively.

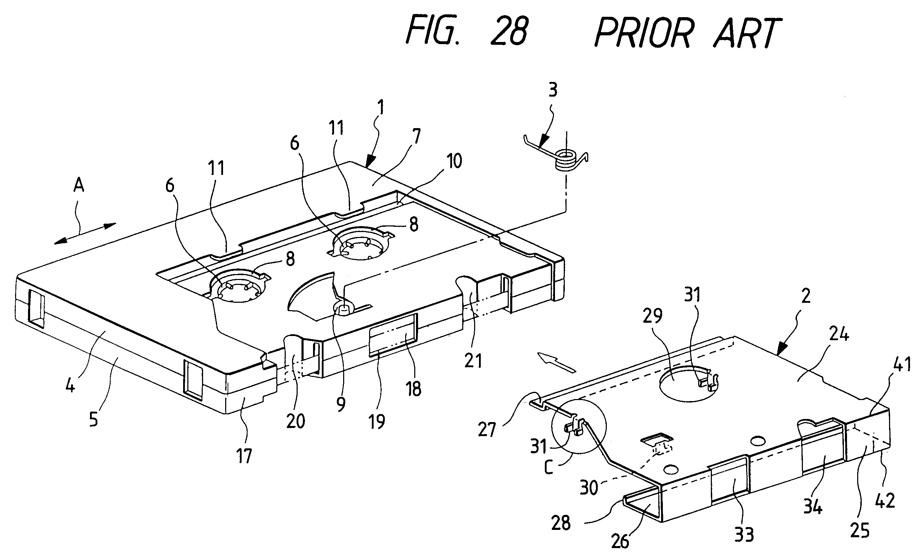

The projection 28 does not need to be provided on the front surface plate 22 of the shutter 20. For instance, as shown in Fig. 26, the projection 28 may be formed at an edge on the urging-direction side of the upper surface plate 23 of the shutter 20. In that case, the recess 13 in the body case 1 is provided at the edge of the shutter sliding surface 33 at a portion corresponding to the position where the projection 28 of the shutter 20 is formed. Furthermore, the swinging of the shutter 20 can be suppressed more effectively by providing the projections 28 of the shutter 20 on a plurality of portions, e.g., on all the surfaces of the upper surface plate 23, the front surface plate 22, and the lower surface plate 21 which constitute the shutter 20.

The shape of the projection 28 and the recess 13 are not intended to be limited to those shown in the figures. For example, the projection 28 and recess 13 may be tapered semicircular or other similar shapes in addition to the illustrated triangular shapes. The shapes of the projection 28 and the recess 13 may be altered as required, so long as they allow the projection and the recess to be progressively fitted together in the sliding direction.

Furthermore, as for the projection 28 of the shutter 20 and the recess 13 in the body case 1, the relationship between the same may be reversed, as shown in Fig. 27.

Although the above description has been made with respect to a magnetic tape cartridge for DCC in the above-described embodiments, the arrangement of the present invention is not limited to this type of cartridge. For example, the present invention could be applied to a 3.5-inch magnetic tape cartridge or various other types of cartridges having a shutter and a cartridge body.

As described above, in the magnetic tape cartridge of the present invention, since the upper and lower ends of the head-inserting opening formed in the front wall portion of the shutter are located inwardly of the curved or inclined surfaces of the bent portions, the burrs formed by the punching of the head-inserting opening project toward the front surface of the cartridge body on which the front wall portion of the shutter slides. Consequently, it is possible to prevent the risk of the user's fingers or the like from coming into contact with the burrs during handling of the magnetic tape cartridge.

Moreover, since the bent portions above and below the front wall portion of the shutter are formed as curved or inclined surfaces, it becomes readily possible to form a gap between the front surface of the cartridge body and the front wall portion of the shutter larger than the projecting length of the burrs. Thus, by enlarging the gap between the cartridge front surface and the front wall portion, it becomes possible to prevent the burrs from rubbing against the cartridge front surface and to prevent the occurrence of shavings or other debris due to the rubbing by the burrs without having to perform a separate step of removing the burrs.

Furthermore, since the bent portions having the curved or inclined surfaces remain above and below the head-inserting opening formed in the front wall portion of the shutter, it is possible to increase the strength of the shutter by virtue of the bending. Consequently, it becomes possible to prevent deformations due to a lack of strength in the vicinity of the head-inserting opening as well as to prevent decreased sliding characteristics and decreased attaching strength due to the deformation.

In addition, as for the head-inserting opening of the shutter, since the projecting direction of the burrs are not changed by bending, and the dimensional accuracy of punching can be maintained, it becomes possible to improve the dimensional accuracy of the opening for the magnetic tape cartridge.

As described above, in the magnetic tape cartridge of the present invention, the shutter which is fitted to the cartridge body is arranged such that the lower shutter and the upper shutter are formed separately, and the fitting of the shutter to the cartridge body is effected such that after the lower shutter and the upper shutter are fitted to the cartridge body separately, the lower shutter and the upper shutter are connected and fixed by the connecting means.

Accordingly, since the lower shutter half which is provided with projections such as the hub-rotation preventing means can be fitted to the cartridge body over the cartridge bottom surface along the projecting direction of the hub-rotation preventing means, it is possible to avoid the problems of the prior art where the hub-rotation preventing means and the like interfere with the cartridge front surface during assembly. Also, the dimensional difference of the shutter with respect to the cartridge body can be made relatively small, thereby making it possible to improve the sliding characteristics. Furthermore, it is possible to fit the shutter to the cartridge body easily and quickly, thereby making it possible to improve the manufacturing and assembling productivity of the magnetic tape cartridges.

As described above, in accordance with the magnetic tape cassette of the present invention, since the hub-retaining projections for engaging the internal teeth for the prevention of rotation of the reel hub are formed by the integral molding of a synthetic resin separately from the shutter which is formed by providing a metallic thin plate with a series of sheet metal working operations such as blanking and bending, the accuracy with which the hub-retaining projections are attached depends on the punching accuracy of the holes formed in the shutter 41 by punching and the molding accuracy of the hub-retaining projections by means of injection molding or the like. Each of these operations can thus be performed more accurately and easily.

Accordingly, it is possible to provide hub-retaining projections which are accurately and precisely formed, and which reduce the number of bending operations required for forming the shutter. Hence, it is possible to prevent the occurrence of drawbacks such as a decrease in the product yield and a decline in the function of preventing the rotation of the reel hub, which are attributable to poor dimensional accuracy. At the same time, it is possible to reduce the production costs.

In addition, as for the hub-retaining projections obtained by the molding of a synthetic resin, the width and other dimensions of the projections can be set freely and easily unlike the case where the hub-retaining projections are formed by bending a thin plate. Hence, the reel hubs can be positioned and fixed more accurately. Also, it is possible to prevent the rattling of the reel hubs when the shutter is in the closed state.

Furthermore, since the hub-retaining projections are formed of a resin having a hardness equivalent to that of the rotation-preventing internal teeth, it is possible to prevent shavings or other debris generated from engagement between the rotation-preventing internal teeth and the hub-retaining projections, thereby making it possible to avoid fouling the magnetic tape or the like due to the presence of these shavings or other debris.

As described above, in accordance with the present invention, since a projection or recess is provided at an urging direction-side end of the shutter, and a recess or projection for engagement with the projection or recess of the shutter is formed on the body case, it is possible to suppress the swinging of the shutter in directions perpendicular to the width direction of the body case or the sliding direction, thereby making it possible to protect the magnetic tape reliably. In addition, even when the magnetic tape cartridge is subjected to a strong impact, the shutter is prevented from being disengaged from the body case, so that it becomes easy to handle the cartridge.

## Claims

1. A magnetic tape cartridge comprising a cartridge body formed from upper and lower cartridge halves, a pair of reel hubs rotatably supported inside the cartridge body, a magnetic tape wound around the reel hubs, a magnetic head-inserting window and pockets provided on a front surface of the cartridge body, and a shutter made of a thin-plate member and provided slidably on the cartridge body to open or close a pair of hub holes, the magnetic head-inserting window and the pockets, wherein said shutter is substantially U-shaped with a bottom wall portion, a front wall portion and a top wall portion, and wherein said shutter further comprises:
a first bent portion between said bottom wall portion and said front wall portion and a second bent portion between said front wall portion and said upper wall portion, each of said first and second bent portions forming one of a curved and inclined surface extending in a lengthwise direction of said shutter, and wherein at least the magnetic head-inserting opening formed in the front wall portion of the shutter extends no further in a widthwise direction of the shutter than said first and second bent portions.

2. A magnetic tape cartridge comprising a cartridge body formed from upper and lower cartridge halves, a pair of reel hubs rotatably supported inside the cartridge body, a magnetic tape wound around the reel hubs, a magnetic head-inserting window and pockets provided on a front surface of the cartridge body, and a shutter made of a thin-plate member and provided slidably on the cartridge body to open or close a pair of hub holes, the magnetic head-inserting window and the pockets, wherein said shutter comprises:
a lower shutter portion having a bottom wall portion slidably supported on a bottom surface of the cartridge body;
an upper shutter portion having an upper wall portion slidably supported on an upper surface of the cartridge body, wherein said lower shutter portion and said upper shutter portion are fitted to said cartridge body separately; and
connecting means for connecting and fixing together said lower shutter portion and said upper shutter portion after said lower and upper shutter portions are slidably secured to said cartridge body.

3. A magnetic tape cartridge according to Claim 2, wherein said lower shutter portion includes a front wall portion in which the magnetic head-inserting window and the pockets are formed, and wherein said connecting means comprises:
a plurality of retaining-piece inserting grooves on both sides of the front wall portion, each of said grooves extending in a direction parallel to a thickness direction of the cartridge, and wherein retaining holes are provided in said retaining-piece inserting grooves; and
retaining pieces provided in said upper shutter portion and having retaining projections for engagement in said retaining holes, each of said retaining projections protruding into said retaining-piece inserting grooves, respectively, whereby said retaining holes and said retaining projections are engaged with each other to connect and secure said lower and upper shutter portions together.

4. A magnetic tape cartridge according to Claim 2, wherein said upper shutter portion has a front wall portion in which the magnetic head-inserting window and pockets are formed, and wherein at least one supporting piece projects from an edge of the front wall portion so as to extend in parallel with the upper wall portion, said at least one supporting piece being provided with a retaining pawl for engagement with a corresponding slit in said lower shutter portion, whereby said retaining pawl is inserted into said slit to connect and fix together said lower shutter portion and said upper shutter portion.

5. A magnetic tape cartridge comprising a cartridge body formed from upper and lower cartridge halves, a pair of reel hubs rotatably supported inside the cartridge body, a magnetic tape wound around the reel hubs, a magnetic head-inserting window and pockets provided on a front surface of the cartridge body, and a shutter made of a thin-plate member and provided slidably on the cartridge body to open or close a pair of hub holes, the magnetic head-inserting window and the pockets, wherein said shutter is substantially U-shaped with a bottom wall portion, a front wall portion and a top wall portion, and wherein said shutter further comprises:
a hub-rotation preventing means protruding inwardly from the bottom wall portion for preventing rotation of the reel hubs, said hub-rotation preventing means engaging rotation-preventing internal teeth formed on an inner peripheral side of each of the reel hubs when the shutter is in a closed position, said hub-rotation preventing means comprising a hub-retaining projection formed of a synthetic resin separately from a remaining portion of the shutter.

6. A magnetic tape cartridge as recited in claim 5, wherein said hub-rotation projection comprises:
a substantially L-shaped main body block comprised of a baseplate portion for abutting against a rear surface of the bottom wall portion of said shutter;
a column portion projecting from the baseplate portion;
a bar-like portion protruding from said main body block for secure engagement with a hole provided in the rear surface of the bottom wall portion of said shutter; and
a pair of hub-retaining projections projecting from a distal end of the column portion in a sliding direction of the shutter for engagement with the rotation-preventing internal teeth formed on an inner peripheral side of each of the reel hubs.

7. A magnetic tape cartridge as recited in claim 5, wherein said hub retaining projection comprises:
at least two column pieces projecting from a rear surface of the bottom wall of the shutter and formed by bending a portion of the bottom wall of the shutter;
a main-body block integrally molded from a synthetic resin to include a pair of hub-retaining projections and a number of grooves equal to the number of column pieces, each of said column pieces being secured within a corresponding one of said grooves to secure said main-body block to the bottom wall of the shutter.

8. A magnetic tape cartridge as recited in claim 5, wherein said hub retaining projection comprises:
one or more column pieces formed by bending an end portion of the bottom wall of the shutter in a widthwise direction of the shutter substantially perpendicularly towards the cartridge body and having one or more holes extending through a portion of each of the one or more column pieces; and
hub-retaining projections formed from a synthetic resin and secured within corresponding ones of the one or more holes for engagement with the rotation-preventing internal teeth formed on an inner peripheral side of each of the reel hubs.

9. A magnetic tape cartridge comprising a cartridge body formed from upper and lower cartridge halves, a pair of reel hubs rotatably supported inside the cartridge body, a magnetic tape wound around the reel hubs, a magnetic head-inserting window and pockets provided on a front surface of the cartridge body, and a shutter made of a thin-plate member and provided slidably on the cartridge body to open or close a pair of hub holes, the magnetic head-inserting window and the pockets, wherein said shutter is substantially U-shaped with a bottom wall portion, a front wall portion and a top wall portion, and wherein one of a projection and a recess are formed on an edge of the shutter for engagement with a corresponding fitting portion on the cartridge body when said shutter is moved to a closed position.

10. A magnetic tape cartridge as recited in claim 9, wherein said one of a projection and a recess is formed on an edge of the front wall of the shutter, and wherein the corresponding fitting portion is formed on the front surface of the cartridge body so as to be adjacent said one of a projection and a recess when said shutter is in a closed position.
